# EUROPEAN PATENT APPLICATION

(11) **EP 4 842 004 A1**
(43) Date of publication of application: **18.11.2026**
(21) Application number: 25903183.9
(22) Date of filing: 12.11.2025
(51) Int. Cl.: H04N 23/54

(54) **ANTI-SHAKE MOTOR, CAMERA MODULE, AND ELECTRONIC DEVICE**

(30) Priority: 11.12.2024 CN 202411837847
(71) Applicant: Huawei Technologies Co., Ltd., Shenzhen, Guangdong 518129 (CN)
(72) Inventor: WANG, Wei, Shenzhen, Guangdong 518129 (CN); QIN, Shixin, Shenzhen, Guangdong 518129 (CN)
(74) Representative: Goddar, Heinz J.
(86) International application number: PCT/CN2025/134510
(87) International publication number: WO 2026/124105

(57) **Abstract**

Embodiments of this application provide an image stabilization motor, a camera module, and an electronic device, and pertain to the field of image shooting technologies. The image stabilization motor includes a suspension wire, a stator, and a mover. The stator includes a stationary platform and an avoidance concave, the avoidance concave is located on a side that is of the stationary platform and that faces the suspension wire in a direction perpendicular to a thickness direction of the image stabilization motor, the avoidance concave penetrates the stationary platform in the thickness direction of the image stabilization motor, and the avoidance concave is configured to avoid the suspension wire. The mover is configured to bear an image sensor, and the suspension wire is connected between the mover and the stationary platform. In the direction perpendicular to the thickness direction of the image stabilization motor, a center of gravity of the mover is between the avoidance concave and a geometric center of the mover, and the center of gravity and the geometric center of the mover are spaced apart. In this way, the image stabilization motor has high reliability.

## Description

This application claims priority to Chinese Patent Application No. 202411837847.5, filed with the China National Intellectual Property Administration on December 11, 2024 and entitled "IMAGE STABILIZATION MOTOR, CAMERA MODULE, AND ELECTRONIC DEVICE", which is incorporated herein by reference in its entirety.

### TECHNICAL FIELD

This application relates to the field of image shooting technologies, and in particular, to an image stabilization motor, a camera module, and an electronic device.

### BACKGROUND

With popularization of electronic devices such as smartphones and tablet computers, users have increasingly high requirements on image shooting quality of the electronic devices. When the electronic device is used to perform an image shooting operation, vibration of the electronic device is difficult to avoid, severely affecting image shooting quality. Therefore, an image stabilization structure needs to be disposed in a camera module. In a related technology, an image stabilization solution for a camera is optical image stabilization based on displacement of an image sensor. An image stabilization motor is used to drive the image sensor to move, to adjust a specific position and posture of the image sensor, so as to achieve vibration correction. However, the image stabilization motor in the related technology has low reliability, and consequently, the image stabilization motor carries a high risk of failure.

### SUMMARY

Embodiments of this application provide an image stabilization motor, a camera module, and an electronic device. The image stabilization motor has high reliability.

According to a first aspect, an embodiment of this application provides an image stabilization motor. The image stabilization motor includes a suspension wire, a stator, and a mover. The stator includes a stationary platform and an avoidance concave, the avoidance concave is located on a side that is of the stationary platform and that faces the suspension wire in a direction perpendicular to a thickness direction of the image stabilization motor, the avoidance concave penetrates the stationary platform in the thickness direction of the image stabilization motor, and the avoidance concave is configured to avoid the suspension wire. The mover is configured to bear an image sensor, and the suspension wire is connected between the mover and the stationary platform. In the direction perpendicular to the thickness direction of the image stabilization motor, a center of gravity of the mover is between the avoidance concave and a geometric center of the mover, and the center of gravity and the geometric center of the mover are spaced apart.

During working of the image stabilization motor, all moving components in the image stabilization motor other than the suspension wire form the mover, and stationary components in the image stabilization motor other than the suspension wire form the stator. The mover can drive the image sensor to perform translation or rotation, so that the image sensor suppresses vibration in three directions: X-axis translation, Y-axis translation, and Z-axis rotation, to resolve problems such as optical image instability and image rotation, and enhance imaging quality.

In addition, in a procedure in which a reliability test is performed on the image stabilization motor or an electronic device accidentally falls or collides, because a center of gravity and a geometric center of the mover do not coincide, the mover is likely to move in a direction perpendicular to a thickness direction of the image stabilization motor, and consequently, the suspension wire collides with the stationary platform in this direction. This causes the suspension wire to be jammed by the stationary platform and squeezed, making the suspension wire prone to damage. In other words, the suspension wire carries a high risk of failure, and the suspension wire has low reliability. In view of this, in this embodiment of this application, the avoidance concave for avoiding the suspension wire is provided on the stationary platform, to prevent the suspension wire from colliding with the stationary platform or being squeezed, so as to reduce a risk of failure of the suspension wire, so that the suspension wire has high reliability, and further, the image stabilization motor has high reliability. In addition, this can prevent the suspension wire from colliding with the stationary platform to generate tiny particles, so that performance of the image stabilization motor is enhanced.

In addition, in comparison with a conventional technology in which a width of a clearance space is increased to reduce a risk of failure of the suspension wire, using the avoidance concave to reduce a risk of failure of the suspension wire does not increase the width of the clearance space. A width of a clearance between the mover and the stationary platform may be designed as a small width, so that the image stabilization motor has a small size in a direction perpendicular to the thickness direction of the image stabilization motor, to facilitate a miniaturization design of the image stabilization motor.

In a possible implementation, the stator further includes a coil circuit board, an integrated circuit, and a shielding cover. The integrated circuit is electrically connected to a side of the coil circuit board. The shielding cover includes a shielding body and a lug plate. The shielding body and the lug plate are located on a same side of the coil circuit board, the shielding body and the coil circuit board enclose an accommodation space for accommodating the integrated circuit, an end of the lug plate is fastened to the shielding body, and the lug plate is located outside the accommodation space and is attached to the coil circuit board.

Generally, the coil circuit board is a flexible circuit board. When the image stabilization motor shakes or the mover collides with the stator, the coil circuit board deforms due to impact of stress. If the coil circuit board deforms excessively, a solder joint between the integrated circuit (IC) and the coil circuit board detaches. Attachment of the lug plate to the coil circuit board can enhance strength of the coil circuit board, and avoid excessive deformation of the coil circuit board, to avoid detachment of the solder joint between the coil circuit board and the integrated circuit. In addition, the integrated circuit is located in the shielding body, and the shielding body may also transfer stress near the integrated circuit from the coil circuit board to the lug plate, to avoid excessive deformation of a part of the coil circuit board near the integrated circuit, so as to avoid detachment of the solder joint between the integrated circuit and the coil circuit board.

In a possible implementation, the stator further includes the coil circuit board, the integrated circuit, and a first reinforcement plate. The integrated circuit is electrically connected to the side of the coil circuit board. The first reinforcement plate is fastened to a side that is of the coil circuit board and that is away from the integrated circuit. At least a part of an orthographic projection of the integrated circuit onto the coil circuit board is within an orthographic projection of the first reinforcement plate onto the coil circuit board.

Generally, the coil circuit board is a flexible circuit board. When the image stabilization motor shakes or the mover collides with the stator, the coil circuit board deforms due to impact of stress. If the coil circuit board deforms excessively, the solder joint between the integrated circuit (IC) and the coil circuit board detaches. The first reinforcement plate is disposed on the side that is of the coil circuit board and that is away from the integrated circuit, and the orthographic projections of the first reinforcement plate and the integrated circuit onto the coil circuit board at least partially overlap. This can enhance strength of a part that is of the coil circuit board and that is in plate connection to the integrated circuit, and avoid excessive deformation of the coil circuit board, to avoid detachment of the solder joint between the integrated circuit and the coil circuit board.

In a possible implementation, the mover further includes a first magnet support and a second magnet support. The second magnet support includes a support main body and a connection plate body. The support main body and the first magnet support are spaced apart in the thickness direction of the image stabilization motor, one end of the connection plate body is fastened to the support main body, another end of the connection plate body is fastened to the first magnet support, and a stiffener structure is disposed on the connection plate body.

Both the first magnet support and the second magnet support are configured to bear a magnet, and the magnet cooperates with a coil of the stator to generate driving force, so that the mover moves relative to the stator and drives the image sensor to move, to implement optical image stabilization. Generally, the second magnet support is made of a metal material and a plastic material, to reduce a weight of the second magnet support, and facilitate a lightweight design of the image stabilization motor. In this case, the connection plate body is made of the metal material and the plastic material, the connection plate body has low strength, and the connection plate body is likely to deform after colliding with the stator. In this embodiment of this application, the stiffener structure forming a reinforcing stiffener is disposed on the connection plate body, so that the connection plate body has high strength, to reduce a risk of deformation of the connection plate body.

In a possible implementation, the mover further includes the first magnet support and the second magnet support. The second magnet support includes the support main body and the connection plate body. The support main body and the first magnet support are spaced apart in the thickness direction of the image stabilization motor, the one end of the connection plate body is fastened to the support main body, the another end of the connection plate body is fastened to the first magnet support, a width of the connection plate body in a width direction of the image stabilization motor gradually decreases in a direction from the support main body to the first magnet support, and each of two end surfaces of the connection plate body in the width direction of the image stabilization motor is an inclined surface inclined to the thickness direction of the image stabilization motor.

Generally, the second magnet support is made of a metal material and a plastic material, to reduce a weight of the second magnet support, and implement a lightweight design of the image stabilization motor. In this case, the connection plate body is made of the metal material and the plastic material, the connection plate body has low strength, and the connection plate body is likely to deform after colliding with the stator. A draft design is applied to the connection plate body, so that the two end surfaces of the connection plate body in the width direction of the image stabilization motor are inclined surfaces, to reduce an area of collision between the connection plate body and the stator in the width direction of the image stabilization motor, so as to reduce a risk of deformation of the connection plate body.

In a possible implementation, the mover further includes the first magnet support and the second magnet support. The first magnet support includes a first metal portion. The second magnet support includes the support main body and the connection plate body. The support main body and the first magnet support are spaced apart in the thickness direction of the image stabilization motor, the one end of the connection plate body is fastened to the support main body, the another end of the connection plate body includes a second metal portion, the second metal portion is welded to the first metal portion, and in a length direction of the image stabilization motor, at least a part of an orthographic projection of a part that is of the second metal portion and that is opposite to the first metal portion onto the first metal portion is within the first metal portion.

Generally, both the first magnet support and the second magnet support are made of a metal material and a plastic material, to reduce a weight of the second magnet support, and implement a lightweight design of the image stabilization motor. In this case, the connection plate body is made of the metal material and the plastic material, the connection plate body has low strength, and the connection plate body is likely to deform after colliding with the stator. In view of this, an orthographic projection of at least a part of the second metal portion onto the first metal portion is within the first metal portion, so that a width of welding between the first metal portion and the second metal portion can be increased, to enhance a deformation resistance capability of the connection plate body.

In a possible implementation, central lines of the first metal portion and the second metal portion in the width direction of the image stabilization motor coincide.

In this implementation, the coincidence of the central lines of the first metal portion and the second metal portion means that the first metal portion and the second metal portion are centrally disposed, to maximize the width of welding between the first metal portion and the second metal portion, so as to further enhance the deformation resistance capability of the connection plate body.

In a possible implementation, the mover further includes the first magnet support and the second magnet support. The second magnet support includes the support main body and the connection plate body. The support main body and the first magnet support are spaced apart in the thickness direction of the image stabilization motor, the one end of the connection plate body is fastened to the support main body, and at least a part of an end surface of an end that is of the connection plate body and that faces the stator in the length direction of the image stabilization motor is made of metal.

Generally, both the first magnet support and the second magnet support are made of a metal material and a plastic material, to reduce a weight of the second magnet support, and implement a lightweight design of the image stabilization motor. During movement of the image stabilization motor, a part that is of the second magnet support and that collides with the stator is the connection plate body, and a surface that is of the connection plate body and that collides with the stator is made of plastic. Due to low strength of the plastic, the plastic is likely to be damaged after a plurality of collisions, and consequently, the connection plate body deforms. In this embodiment of this application, a metal material of the connection plate body is exposed, so that the surface that is of the connection plate body and that collides with the stator is made of metal. The metal has high strength, so that the connection plate body has a strong deformation resistance capability.

In a possible implementation, the stator further includes a coil support and a case. The coil support is in contact with the stationary platform and is fastened to the stationary platform. The case is located on a side that is of the coil support and that is away from the stationary platform in the thickness direction of the image stabilization motor, and the case is welded to the coil support.

Generally, the coil support includes a metal framework and an injection molded part. The entire coil support has low rigidity, and the low-rigidity coil support causes a problem of background noise. In this embodiment of this application, the case is welded to the metal framework of the coil support, and the case is used to support the coil support, to increase rigidity of the coil support, so as to optimize background noise.

In a possible implementation, the stator further includes the coil support, the coil support includes a first metal support and a first injection molded part, the first metal support is of an integrated structure, and the first metal support is fastened to the first injection molded part.

Generally, the coil support includes a metal framework and an injection molded part. The entire coil support has low rigidity, and the low-rigidity coil support causes a problem of background noise. In this embodiment of this application, the first metal support of the integrated structure serves as a metal framework. The first metal support has high rigidity, and can increase rigidity of the first injection molded part, so that rigidity of the coil support can be increased, to optimize running background noise.

In a possible implementation, the stator further includes a cover and the coil support. The cover has a light-transmitting through hole for light to pass through. The coil support includes the first metal support and the first injection molded part. The first metal support includes a metal main portion and a metal bent portion, at least a part of the metal main portion is embedded inside the first injection molded part, and the metal bent portion is fastened to the cover.

Generally, the coil support includes a metal framework and an injection molded part. The entire coil support has low rigidity, and the low-rigidity coil support causes a problem of background noise. Bending the first metal support to form the metal bent portion connected to the cover can increase rigidity of the first metal support, and further increase rigidity of the first injection molded part, to increase rigidity of the coil support, so as to optimize background noise.

In a possible implementation, the stator includes an accommodation cavity and the case. The mover is located inside the accommodation cavity. The case serves as a partial cavity wall of the accommodation cavity and has a washing hole, and the washing hole communicates with the inside of the accommodation cavity.

Generally, during assembly of the image stabilization motor, tiny particles exist inside the image stabilization motor, leading to a particle problem that affects running of the mover and/or photosensitive performance of the image sensor and degrades imaging quality. The washing hole is provided on the case, and the inside of the image stabilization motor is cleaned by using a washing process to take away foreign objects such as particles and dust, to alleviate or resolve the particle problem. The "particle" problem generally refers to impact of tiny particles on motor performance.

In a possible implementation, in the thickness direction of the image stabilization motor, a distance between the washing hole and a bottom surface that is of the case and that is away from the suspension wire is less than or equal to one third of a thickness of the image stabilization motor.

In this implementation, the distance between the washing hole and the bottom surface of the case is less than or equal to one third of the thickness of the motor. This can reduce difficulty in discharging a cleaning medium such as liquid or gas used in the washing process from the image stabilization motor, and can enhance washing effect.

In a possible implementation, the stator further includes the coil support, the cover, a coil circuit board assembly, and an adhesive member. The cover is fastened to the coil support. The coil circuit board assembly is fastened to the coil support. The adhesive member is disposed on a surface of at least one of the coil support, the cover, and the coil circuit board assembly.

In this implementation, tiny particles inside the image stabilization motor are absorbed based on viscosity of the adhesive member, to alleviate the particle problem.

In a possible implementation, the stator further includes a first flexible member, and the first flexible member is disposed on each of two sides of the mover that face away from each other in the length direction of the image stabilization motor.

During working of the image stabilization motor, the mover collides with the stator in the length direction of the image stabilization motor, and a collision form is hard-on-hard collision, which generates an abnormal sound and may generate tiny particles, affecting reliability of the image stabilization motor and imaging quality of the image sensor. The first flexible member is disposed between the mover and the stator. When moving toward the stator in the length direction of the image stabilization motor, the mover collides with the first flexible member. The first flexible member performs a cushioning function, to reduce or eliminate an abnormal sound of collision, and avoid generation of tiny particles.

In a possible implementation, the mover further includes the first magnet support and the second magnet support. At least a part of the second magnet support and the first magnet support are spaced apart in the thickness direction of the image stabilization motor, and the first flexible member faces at least one of the first magnet support and the second magnet support in the length direction of the image stabilization motor.

During working of the image stabilization motor, a specific component that is of the mover and that collides with the stator in the length direction of the image stabilization motor is usually the first magnet support and/or the second magnet support. The first flexible member is disposed on two sides that are of the first magnet support and/or the second magnet support and that face away from each other, so that the first magnet support and/or the second magnet support collide/collides with the first flexible member, to reduce or eliminate an abnormal sound of collision, and avoid generation of tiny particles.

In a possible implementation, the stator further includes a second flexible member, and the second flexible member is disposed on each of two sides of the mover that face away from each other in the width direction of the image stabilization motor.

During working of the image stabilization motor, the mover collides with the stator in the width direction of the image stabilization motor, and a collision form is hard-on-hard collision, which generates an abnormal sound and is likely to generate tiny particles, affecting reliability of the image stabilization motor and imaging quality of the image sensor. The second flexible member is disposed between the mover and the stator. When moving toward the stator in the width direction of the image stabilization motor, the mover collides with the second flexible member. The second flexible member performs a cushioning function, to reduce or eliminate an abnormal sound of collision, and avoid generation of tiny particles.

In a possible implementation, the stator further includes the coil support, and the second flexible member is fastened to the coil support. The mover further includes the first magnet support and the second magnet support, and the second flexible member faces at least one of the first magnet support and the second magnet support in the width direction of the image stabilization motor.

During working of the image stabilization motor, a specific component that is of the mover and that collides with the stator in the width direction of the image stabilization motor is usually the first magnet support and/or the second magnet support. The second flexible member is disposed on two sides that are of the first magnet support and/or the second magnet support and that face away from each other, so that the first magnet support and/or the second magnet support collide/collides with the second flexible member, to reduce or eliminate an abnormal sound of collision, and avoid generation of tiny particles.

In a possible implementation, the mover includes the first magnet support and the second magnet support, and the first magnet support is connected to the second magnet support. The stator includes the case, the coil support, and the coil circuit board assembly, and the case and the coil circuit board assembly are separately fastened to the coil support. The image stabilization motor further includes at least one of the following damping members: a first damping member, a second damping member, and a third damping member. In the thickness direction of the image stabilization motor, the first damping member is located between the first magnet support and the support main body of the second magnet support, one end of the first damping member is in contact with the first magnet support, and another end of the first damping member is in contact with the coil circuit board assembly or the coil support. In the thickness direction of the image stabilization motor, the second damping member is located between the case and the first magnet support, and two ends of the second damping member are respectively in contact with the case and the first magnet support. In the thickness direction of the image stabilization motor, the third damping member is located between the second magnet support and the coil support, and two ends of the third damping member are respectively in contact with the coil support and the second magnet support.

In this implementation, at least one of the first damping member, the second damping member, and the third damping member is disposed, and a damping characteristic of a damping material is used, to help enhance control performance of the image stabilization motor.

In a possible implementation, the mover further includes a first magnet member and the first magnet support, the first magnet support includes a first magnetic conductive sheet and a second magnetic conductive sheet, the first magnetic conductive sheet is located between the first magnet member and the second magnetic conductive sheet, and the first magnet member is a Halbach magnet array.

In this implementation, the design of combining the Halbach magnet array and the two magnetic conductive sheets can achieve small restoring force. This means that when power supply to the image stabilization motor stops, interaction force between magnets is small, which reduces rebound or vibration and enhances control accuracy. Small restoring force helps the image stabilization motor reach a target position and stabilize more quickly, which is particularly important for the image stabilization motor that needs a quick response.

In a possible implementation, the stator further includes a third magnet member, in the thickness direction of the image stabilization motor, the third magnet member is located on a side that is of the second magnetic conductive sheet and that is away from the first magnetic conductive sheet, and is spaced apart from the second magnetic conductive sheet, and the third magnet member is magnetically attracted to the second magnetic conductive sheet.

In this implementation, the third magnet member is magnetically attracted to the second magnetic conductive sheet. This means that magnetic attraction force exists between the third magnet member and the second magnetic conductive sheet. In addition, because a position of the third magnet member remains unchanged, the magnetic attraction force pulls the first magnet support, so that the first magnet support does not accidentally move toward the image sensor.

According to a second aspect, an embodiment of this application provides a camera module. The camera module includes a lens, an image sensor, and the image stabilization motor according to any one of the implementations of the first aspect. The image sensor is located on a light exit side of the lens, and the image sensor is fastened to the mover of the image stabilization motor.

According to a third aspect, an embodiment of this application provides an electronic device. The electronic device includes a housing and the camera module according to the second aspect, and the camera module is mounted on the housing.

### BRIEF DESCRIPTION OF DRAWINGS

FIG. 1 is an exploded view of an electronic device according to an embodiment of this application;
FIG. 2 is a diagram of a structure of a camera module in FIG. 1;
FIG. 3 is a diagram of a three-dimensional structure of an image stabilization motor according to an embodiment of this application;
FIG. 4 is a diagram of a three-dimensional structure of a coil support in FIG. 3;
FIG. 5 is an exploded view of the coil support shown in FIG. 4;
FIG. 6 is a diagram of a three-dimensional structure of a cover in FIG. 3;
FIG. 7 is a top view of a main circuit board assembly in FIG. 3;
FIG. 8 is a sectional view in which a main circuit board and a carrier circuit board in FIG. 7 are in cooperation with each other;
FIG. 9 is a diagram of a three-dimensional structure of the main circuit board in FIG. 8;
FIG. 10 is a top view of the main circuit board shown in FIG. 9;
FIG. 11 is a sectional view of the image stabilization motor shown in FIG. 3 from a first viewpoint;
FIG. 12 is a sectional view of the image stabilization motor shown in FIG. 3 from a second viewpoint;
FIG. 13 is a diagram of a three-dimensional structure in which a first magnet support, a second magnet support, and a first magnet member in FIG. 15 are in cooperation with each other;
FIG. 14 is a diagram of a three-dimensional structure of the second magnet support in FIG. 13;
FIG. 15 is a sectional view of the image stabilization motor shown in FIG. 3 from a third viewpoint;
FIG. 16 is a diagram of a three-dimensional structure of a coil circuit board assembly in FIG. 3 from a first viewpoint;
FIG. 17 is a diagram of a three-dimensional structure of a coil circuit board assembly in FIG. 3 from a second viewpoint;
FIG. 18 is a sectional view of the coil circuit board assembly shown in FIG. 16;
FIG. 19 is a diagram of a three-dimensional structure of a shielding cover in FIG. 16;
FIG. 20 is a diagram of a structure in which a second magnet support and a first magnet support are in other cooperation with each other according to an embodiment of this application;
FIG. 21 is an enlarged view of a position P in FIG. 20;
FIG. 22 is a left view in which a second magnet support and a first magnet support are in still other cooperation with each other according to an embodiment of this application;
FIG. 23 is a sectional view in which a first flexible member is disposed on two sides that are of a first magnet support and a second magnet support and that face away from each other;
FIG. 24 is a diagram of a three-dimensional structure in which a second flexible member is disposed on a coil support;
FIG. 25 is a sectional view in which a second flexible member is in cooperation with a coil support, a first magnet support, and a second magnet support;
FIG. 26 is a diagram, from a first viewpoint, in which a coil support and a case in FIG. 3 are connected to each other;
FIG. 27 is a diagram, from a second viewpoint, in which a coil support and a case in FIG. 3 are connected to each other;
FIG. 28 is a diagram of a three-dimensional structure of a first metal support in FIG. 5;
FIG. 29 is a diagram, from a first viewpoint, in which a coil support and a cover in FIG. 3 are connected to each other;
FIG. 30 is a diagram, from a second viewpoint, in which a coil support and a cover in FIG. 3 are connected to each other;
FIG. 31 is a diagram of a three-dimensional structure of a case in FIG. 3;
FIG. 32 is a sectional view in which a first damping member and a first magnet support in FIG. 16 are in cooperation with each other;
FIG. 33 is a sectional view in which a second damping member is in cooperation with a case and a first magnet support;
FIG. 34 is a sectional view in which a third damping member is in cooperation with a coil support and a second magnet support; and
FIG. 35 is an enlarged view of a position M in FIG. 34.

Reference numerals:
100: electronic device; 110: housing; 111: middle frame; 112: rear cover; 120: camera module; 121: lens; 122: image sensor; 123: image stabilization motor; 130: display; 140: battery;
10: cover; 11: light-transmitting through hole; 12: second metal support; 13: second injection molded part;
20: filter carrying base;
30: main circuit board assembly; 31: external circuit board; 32: main circuit board;
321: stationary platform;
322: suspension wire; 3221: flexible connection structure; 3221a: first flexible connection structure; 3221b: second flexible connection structure; 3222: strip portion; 3223: connection portion;
323: movable platform; 324: clearance space; 325: avoidance concave; 33: carrier circuit board;
41: first magnet support; 411: first metal portion; 412: first magnetic conductive sheet; 413: second magnetic conductive sheet;
42: second magnet support; 421: support main body; 4211: connection body 4211; 422: connection plate body; 4221: second metal portion; 423: stiffener structure;
43: first magnet member; 44: second magnet member; 45: third magnet member;
50: coil circuit board assembly; 51: coil circuit board; 52: integrated circuit; 53: shielding cover; 531: shielding body; 532: lug plate; 54: first reinforcement plate; 55: second reinforcement plate; 56: first coil; 57: second coil; 58: third coil;
61: coil support; 611: first metal support; 6111: metal main portion; 6112: metal bent portion; 612: first injection molded part; 613: through space;
62: case; 63: washing hole;
64: first flexible member; 65: second flexible member;
66: first damping member; 67: second damping member; 68: third damping member;
71: connection member; 72: first adhesive bonding member; 73: second adhesive bonding member;
80: mover; 90: stator; 91: accommodation cavity;
X: length direction; Y: width direction; Z: thickness direction.

### DESCRIPTION OF EMBODIMENTS

Terms used in implementations of this application are merely used to explain specific embodiments of this application, but are not intended to limit this application.

An embodiment of this application provides an electronic device 100, including but not limited to a device having a camera module 120, such as a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), a wearable device, a virtual reality device, a Bluetooth speaker, or a vehicle-mounted apparatus.

In this embodiment of this application, a mobile phone is used as an example of the electronic device 100 to specifically describe structures of the electronic device 100 and the camera module 120.

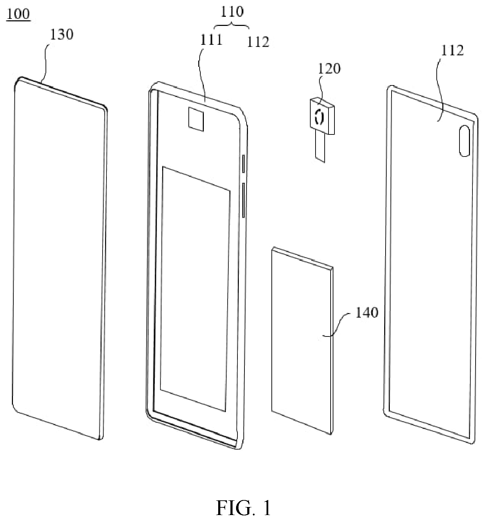

FIG. 1 is an exploded view of an electronic device according to an embodiment of this application.

Refer to FIG. 1. The electronic device 100 includes a housing 110, a display 130, and a camera module 120. The camera module 120 is mounted on the housing 110. The housing 110 includes a middle frame 111 and a rear cover 112. The rear cover 112 and the display 130 are respectively located on two sides of the middle frame 111 that face away from each other, and are separately connected to the middle frame 111. The middle frame 111, the rear cover 112, and the display 130 enclose a cavity for accommodating components such as a battery 140 and the camera module 120.

There may be one camera module 120, or there may be a plurality of camera modules 120, to meet different image shooting requirements. For example, two camera modules 120 may be mounted on the front of the electronic device 100, and three camera modules 120 may be mounted on the back. A quantity of mounted camera modules 120 is not limited in embodiments of this application. When a plurality of camera modules 120 are mounted, the plurality of camera modules 120 may be the same or different. For example, the plurality of camera modules 120 include different quantities of lenses, optical parameters of lenses are different, or lens positions are different.

The camera module 120 may be a standard camera module, a long-focus camera module, a wide-angle camera module, an ultra-long-focus camera module, an ultra-wide-angle camera module, or the like.

It should be understood that, the electronic device 100 shown in FIG. 1 is not limited to including the foregoing components, and may further include another component, such as a flash, a fingerprint recognition module, an earpiece, a button, or a sensor.

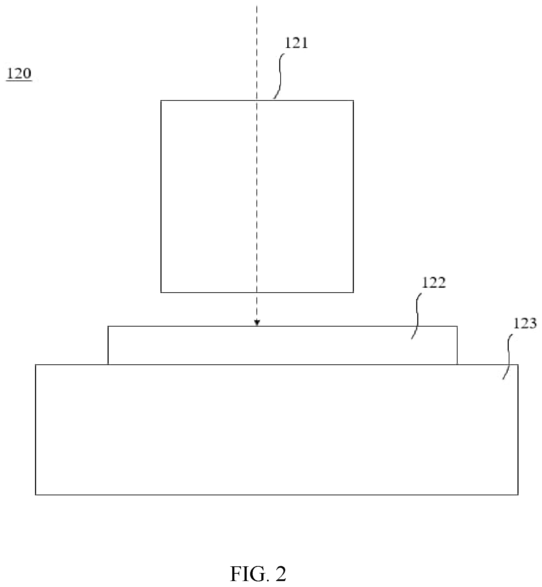

FIG. 2 is a diagram of a structure of the camera module in FIG. 1.

Refer to FIG. 2. The camera module 120 includes a lens 121, an image sensor 122, and an image stabilization motor 123. The image sensor 122 is located on a light exit side of the lens 121, and the image sensor 122 is fastened to the image stabilization motor 123. When the electronic device 100 performs an image shooting operation, the image stabilization motor 123 is configured to drive the image sensor 122 to move, so that the image sensor 122 suppresses vibration in three directions: X-axis translation, Y-axis translation, and Z-axis (in an XY plane) rotation, to resolve problems such as optical image instability and image rotation, implement optical image stabilization, and enhance image shooting quality.

In a related technology, an image stabilization motor includes a stator, a mover, and a suspension wire, the mover is fastened to an image sensor, and the suspension wire is connected between the stator and the mover. In a procedure in which a reliability test is performed on the image stabilization motor or an electronic device accidentally falls or collides, when the mover moves relative to the stator, the suspension wire is likely to be jammed by the stator and squeezed, causing damage to the suspension wire. It can be learned that the image stabilization motor has low reliability, and consequently, the image stabilization motor carries a high risk of failure.

One of reasons why the suspension wire is jammed by the stator is that a center of gravity and a geometric center of the mover do not coincide. In other words, the center of gravity of the mover is offset. The mover is likely to move in a direction perpendicular to a thickness direction Z of the image stabilization motor, and consequently, the suspension wire collides with the stator in this direction. This causes the suspension wire to be jammed by the stator and squeezed, making the suspension wire prone to damage. In other words, the suspension wire carries a high risk of failure, and the suspension wire has low reliability. In addition, when the suspension wire collides with the stator, tiny particles are likely to be generated, leading to a particle problem that affects performance of the image stabilization motor and imaging quality of the image sensor. The "particle" problem generally refers to impact of tiny particles on motor performance.

For example, a Chinese meaning of "particle" may be particle, and therefore the particle problem may be referred to as a problem of particle.

In an implementation, increasing a distance between the mover and the stator in a movement direction of the mover can avoid collision between the suspension wire and the stator, so that the suspension wire does not fail. However, in this manner, the distance between the mover and the stator is large, resulting in a large volume of the image stabilization motor and difficulty in miniaturization of the image stabilization motor. Therefore, how to enhance reliability of the image stabilization motor without increasing a volume of the image stabilization motor becomes an urgent problem to be resolved.

In view of this, embodiments of this application provide an image stabilization motor 123. An avoidance concave 325 is provided at a position that is on a stator 90 and at which a suspension wire 322 is likely to be squeezed, to avoid the suspension wire 322 and prevent the suspension wire 322 from being jammed by the stator 90 and squeezed, so as to enhance reliability of the suspension wire 322 and reduce a risk of failure of the suspension wire 322, and further enhance reliability of the image stabilization motor 123. In addition, using the avoidance concave 325 to enhance reliability of the suspension wire 322 does not increase a volume of the image stabilization motor 123. This helps achieve miniaturization and high reliability of the image stabilization motor 123, and alleviates the particle problem.

With reference to accompanying drawings, the following describes in detail the image stabilization motor 123 provided in embodiments of this application.

In embodiments of this application, the image stabilization motor 123 includes a cover (cover) 10, a main circuit board assembly 30, a filter carrying base 20, a filter (not shown in the figure), a coil support 61, a first magnet support 41, a second magnet support 42, a first magnet member 43, a second magnet member 44, a coil circuit board assembly 50, and a case (case) 62.

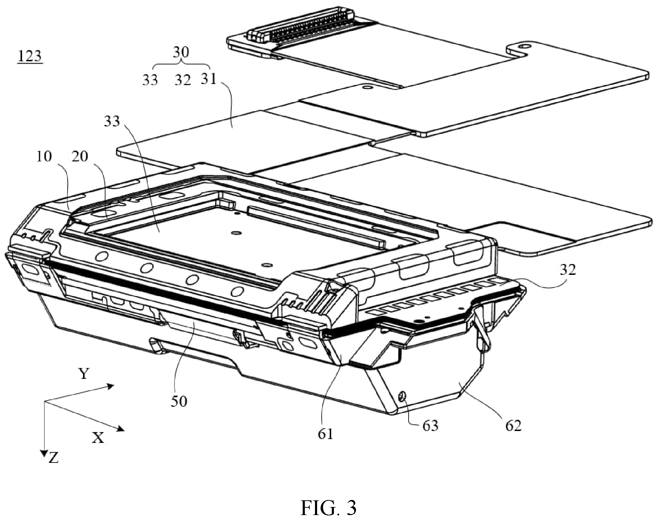

FIG. 3 is a diagram of a three-dimensional structure of an image stabilization motor according to an embodiment of this application.

As shown in FIG. 3, in a thickness direction Z of the image stabilization motor 123, the cover 10 is located on one side of the coil support 61 and is fastened to the coil support 61, and the case 62 is located on another side of the coil support 61 and is fastened to the coil support 61. The cover 10, the coil support 61, and the case 62 may jointly enclose an arrangement space. The arrangement space is configured to accommodate components such as a part of the main circuit board assembly 30, the coil circuit board assembly 50, the first magnet support 41, the second magnet support 42, the first magnet member 43, the second magnet member 44, the filter carrying base 20, the filter, and an image sensor 122.

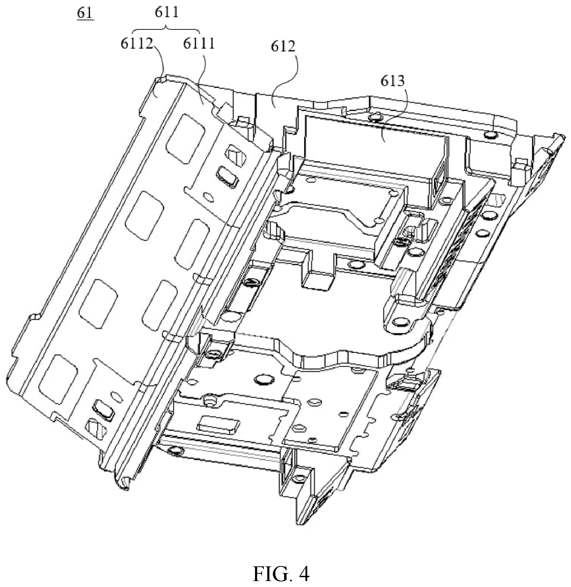

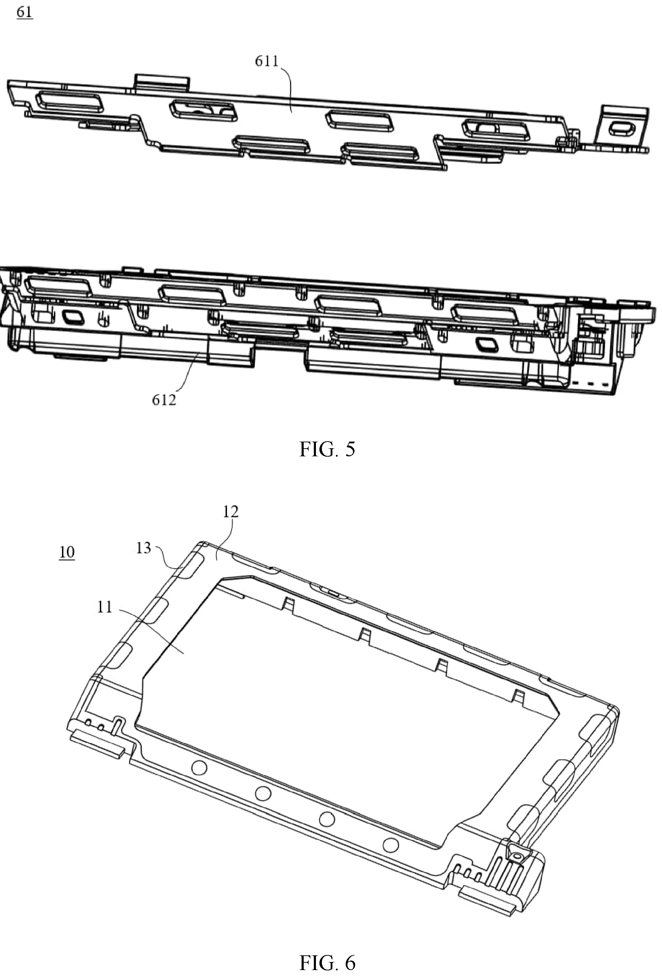

FIG. 4 is a diagram of a three-dimensional structure of the coil support in FIG. 3. FIG. 5 is an exploded view of the coil support shown in FIG. 4.

To effectively balance strength and a weight of the coil support 61, it can be learned from FIG. 4 and FIG. 5 that the coil support 61 may include a first metal support 611 and a first injection molded part 612, and the first metal support 611 serves as a metal framework of the coil support 61. At least a part of the first metal support 611 is embedded inside the first injection molded part 612. For example, a part of the first metal support 611 is disposed inside the first injection molded part 612.

The first metal support 611 and the first injection molded part 612 are combined through injection molding. In some implementable processes, the first metal support 611 is placed in a mold, and then the first injection molded part 612 is formed on the first metal support 611 through injection molding.

FIG. 6 is a diagram of a three-dimensional structure of the cover in FIG. 3.

Refer to FIG. 6. The cover 10 has a light-transmitting through hole 11. The light-transmitting through hole 11 is located on a photosensitive side of the image sensor 122 and is provided opposite to a photosensitive surface of the image sensor 122. The light-transmitting through hole 11 is used for light incident to the photosensitive surface of the image sensor 122 to pass through. The cover 10 may be fastened to the coil support 61 through welding, clamping, threaded connection, or the like. For example, the cover 10 is welded to the coil support 61.

In some embodiments, to effectively balance strength and a weight of the cover 10, as shown in FIG. 6, the cover 10 may include a second metal support 12 and a second injection molded part 13, the second metal support 12 is fastened to the second injection molded part 13, and the second metal support 12 may be of a mesh structure. The second metal support 12 and the second injection molded part 13 may form an integrated structure through injection molding. The second metal support 12 is welded to the first metal support 611 of the coil support 61.

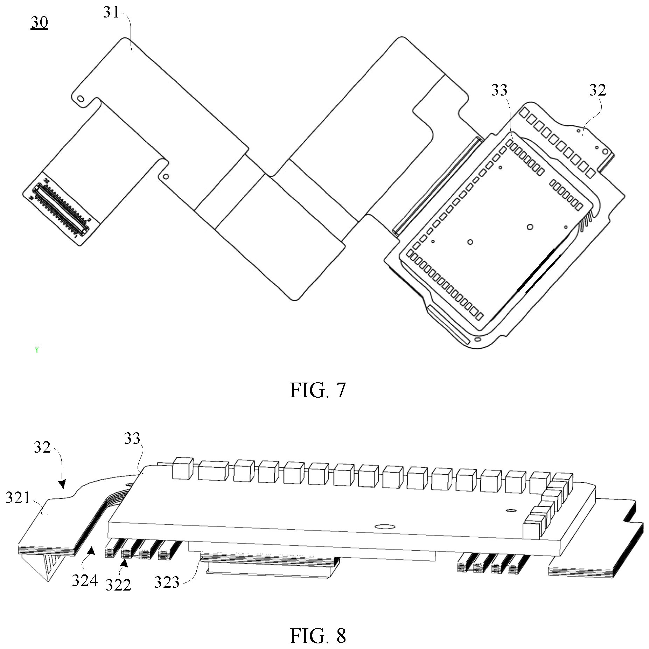

FIG. 7 is a top view of the main circuit board assembly in FIG. 3.

As shown in FIG. 7, the main circuit board assembly 30 includes an external circuit board 31, a main circuit board 32, and a carrier circuit board 33.

FIG. 8 is a sectional view in which the main circuit board and the carrier circuit board in FIG. 7 are in cooperation with each other.

As shown in FIG. 8, the carrier circuit board 33 and the main circuit board 32 are stacked, the carrier circuit board 33 is mechanically connected and electrically connected to a movable platform 323 of the main circuit board 32, and the carrier circuit board 33 is configured to bear the image sensor 122 and is electrically connected to the image sensor 122. The image sensor 122 is electrically connected to the main circuit board 32 through the carrier circuit board 33. The image sensor 122 and the main circuit board 32 are respectively located on two sides of the carrier circuit board 33.

With reference to FIG. 7 and FIG. 8, it can be learned that, a first end of the external circuit board 31 is electrically connected to an end surface of a stationary platform 321 of the main circuit board 32, the external circuit board 31 is configured to electrically connect to a processor on a mainboard in an electronic device 100, and the external circuit board 31 may be a flexible circuit board. In some embodiments, the external circuit board 31 is located outside the arrangement space. In some other embodiments, alternatively, one part of the external circuit board 31 may be located in the arrangement space, and the other part may be located outside the arrangement space.

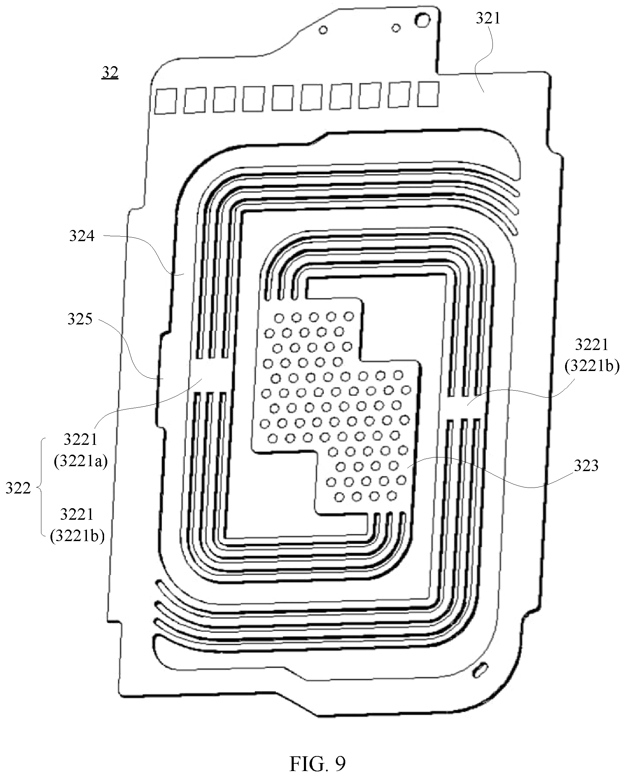

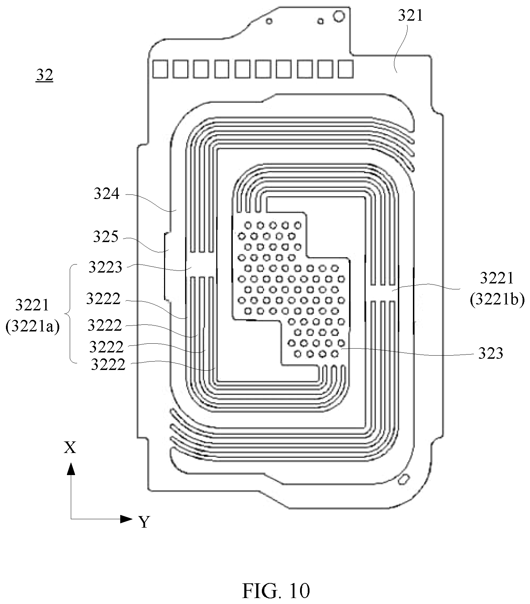

FIG. 9 is a diagram of a three-dimensional structure of the main circuit board in FIG. 8. FIG. 10 is a top view of the main circuit board shown in FIG. 9.

As shown in FIG. 9 and FIG. 10, the main circuit board 32 includes the stationary platform 321, the movable platform 323, and a suspension wire 322. The stationary platform 321 is located on the outside of the movable platform 323, there is a clearance space 324 between the stationary platform 321 and the movable platform 323, the suspension wire 322 is located in the clearance space 324, and the movable platform 323 is mechanically connected and electrically connected to the stationary platform 321 through the suspension wire 322. During working of the image stabilization motor 123, a position of the stationary platform 321 remains unchanged, the movable platform 323 moves relative to the stationary platform 321, and the suspension wire 322 deforms under driving of the movable platform 323.

A specific structure of the suspension wire 322 is not limited herein. For example, as shown in FIG. 10, the suspension wire 322 includes two flexible connection structures 3221, each flexible connection structure 3221 includes a connection portion 3223 and a plurality of strip portions 3222, the plurality of strip portions 3222 are spaced apart in a direction perpendicular to the thickness direction Z of the image stabilization motor 123, two adjacent strip portions 3222 are connected to each other through one connection portion 3223, one end of each strip portion 3222 is connected to the movable platform 323, and another end of each strip portion 3222 is connected to the stationary platform 321.

As shown in FIG. 10, the two flexible connection structures 3221 are a first flexible connection structure 3221a and a second flexible connection structure 3221b. One end of the strip portion 3222 of the first flexible connection structure 3221a and one end of the strip portion 3222 of the second flexible connection structure 3221b are respectively connected to two sides of the movable platform 323 that face away from each other, and another end of the strip portion 3222 of the first flexible connection structure 3221a and another end of the strip portion 3222 of the second flexible connection structure 3221b are respectively connected to two sides of the stationary platform 321 that face away from each other.

A specific quantity of strip portions 3222 is not specifically limited herein. For example, as shown in FIG. 10, each flexible connection structure 3221 may include four strip portions 3222.

As shown in FIG. 10, the stationary platform 321 may be of a closed ring structure. In some other examples, the stationary platform 321 may alternatively be of an unclosed ring-like structure.

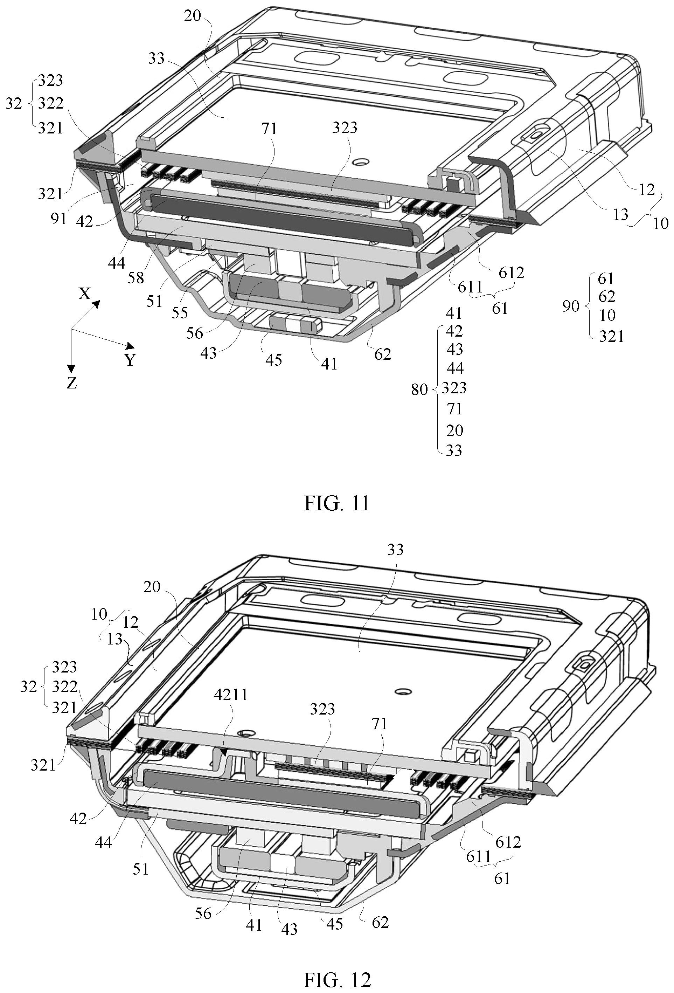

FIG. 11 is a sectional view of the image stabilization motor shown in FIG. 3 from a first viewpoint.

As shown in FIG. 11, in the thickness direction Z of the image stabilization motor 123, the stationary platform 321 is located between the coil support 61 and the cover 10. One side of the movable platform 323 is mechanically connected and electrically connected to the carrier circuit board 33. Another side of the movable platform 323 is fastened to the second magnet support 42.

As shown in FIG. 11, one side of the stationary platform 321 is connected to the cover 10. For example, the stationary platform 321 is bonded to the cover 10. Another side of the stationary platform 321 is connected to the coil support 61. For example, the stationary platform 321 is bonded to the coil support 61.

As shown in FIG. 11, the image stabilization motor 123 further includes a connection member 71, the connection member 71 is located between the movable platform 323 and the second magnet support 42, an orthographic projection of the connection member 71 onto the movable platform 323 is within the movable platform 323, the connection member 71 is separately fastened to the movable platform 323 and the second magnet support 42, and the movable platform 323 is fastened to the second magnet support 42 through the connection member 71. Certainly, in some embodiments, the movable platform 323 may alternatively be directly connected to the second magnet support 42. For example, the movable platform 323 is bonded to the second magnet support 42.

In embodiments of this application, when the image stabilization motor 123 works, it is defined as follows: At least a part of moving components in the image stabilization motor 123 other than the suspension wire 322 form a mover 80, and at least a part of stationary components in the image stabilization motor 123 other than the suspension wire 322 form a stator 90. Therefore, in embodiments of this application, the mover 80 may include but is not limited to components such as the first magnet support 41, the second magnet support 42, the first magnet member 43, the second magnet member 44, the movable platform 323, the connection member 71, the filter carrying base 20, and the carrier circuit board 33 in the foregoing content, and the stator 90 may include but is not limited to components such as the coil support 61, the coil circuit board assembly 50, the case 62, the cover 10, and the stationary platform 321 in the foregoing content.

For example, as shown in FIG. 11, the mover 80 may include the first magnet support 41, the second magnet support 42, the first magnet member 43, the second magnet member 44, the movable platform 323, the connection member 71, the filter carrying base 20, and the carrier circuit board 33, and the stator 90 may include the coil support 61, the case 62, the cover 10, and the stationary platform 321.

For example, with reference to FIG. 11, the stator 90 may include an accommodation cavity 91, and both the mover 80 and the suspension wire 322 are located inside the accommodation cavity 91. The mover 80 is configured to bear the image sensor 122, the suspension wire 322 is connected between the mover 80 and the stationary platform 321 of the stator 90, and the mover 80 is movably connected to the stator 90 through the suspension wire 322. When the image stabilization motor 123 works, the mover 80 drives the image sensor 122 to move relative to the stator 90, and the mover 80 can drive the image sensor 122 to perform translation or rotation, so that the image sensor 122 suppresses vibration in three directions: X-axis translation, Y-axis translation, and Z-axis rotation, to resolve problems such as optical image instability and image rotation, and enhance imaging quality.

In embodiments of this application, a center of gravity and a geometric center of the mover 80 do not coincide. In other words, the center of gravity and the geometric center of the mover 80 are spaced apart. In other words, the center of gravity is offset from the geometric center. A center of gravity refers to an average position of mass distribution of an object. A geometric center refers to a central point of all boundaries of an object, that is, a center of a shape of the object. In this case, in a procedure in which a reliability test is performed on the image stabilization motor 123 or the electronic device 100 accidentally falls or collides, the mover 80 is likely to move in a direction perpendicular to the thickness direction Z of the image stabilization motor 123, or move, in a direction containing the center of gravity and the geometric center of the mover 80, toward a side that is of the center of gravity and that is away from the geometric center, and consequently, the suspension wire 322 collides with the stationary platform 321 in this direction. This causes the suspension wire 322 to be jammed by the stationary platform 321 and squeezed, making the suspension wire 322 prone to damage. In other words, the suspension wire 322 carries a high risk of failure, and the suspension wire 322 has low reliability.

In view of this, as shown in FIG. 10, in embodiments of this application, an avoidance concave 325 is provided on the stationary platform 321, the avoidance concave 325 is located on a side that is of the stationary platform 321 and that faces the suspension wire 322 in a direction perpendicular to the thickness direction Z of the image stabilization motor 123, the avoidance concave 325 penetrates the stationary platform 321 in the thickness direction Z of the image stabilization motor 123, the avoidance concave 325 communicates with the clearance space 324, and in the direction perpendicular to the thickness direction Z of the image stabilization motor 123, the center of gravity of the mover 80 is between the avoidance concave 325 and the geometric center of the mover 80. When the mover 80 moves toward the avoidance concave 325 in the direction perpendicular to the thickness direction Z of the image stabilization motor 123, the avoidance concave 325 is used to avoid the suspension wire 322, so that the suspension wire 322 does not come into contact with the stationary platform 321. This prevents the suspension wire 322 from colliding with the stationary platform 321 or being squeezed, to reduce a risk of failure of the suspension wire 322, so that the suspension wire 322 has high reliability, and further, the image stabilization motor 123 has high reliability. In addition, the suspension wire 322 does not collide with the stationary platform 321, so that tiny particles are not generated.

In addition, in comparison with a conventional technology in which a width of the clearance space 324 is increased to prevent the suspension wire 322 from colliding with the stationary platform 321, in embodiments of this application, the avoidance concave 325 for avoiding the suspension wire 322 is provided in a partial region in which the stationary platform 321 collides with the suspension wire 322, to reduce a risk of failure of the suspension wire 322 without increasing a width of the clearance space 324 in the direction perpendicular to the thickness direction Z of the image stabilization motor 123. The width of the clearance space 324 may still be designed as a small width, so that the main circuit board 32 has a small size in the direction perpendicular to the thickness direction Z of the image stabilization motor 123, to facilitate a miniaturization design of the image stabilization motor 123.

A specific structure of the avoidance concave 325 is not limited herein. For example, as shown in FIG. 10, the avoidance concave 325 may be a strip-shaped concave. In addition, a specific size of the avoidance concave 325 is not limited herein. For example, a depth of the avoidance concave 325 in a width direction of the image stabilization motor 123 may be greater than 0.1 mm, and a length of the avoidance concave 325 in a length direction X of the image stabilization motor 123 may be greater than 2 mm.

FIG. 12 is a sectional view of the image stabilization motor shown in FIG. 3 from a second viewpoint.

To enhance movement stability of the image sensor 122, in some embodiments, as shown in FIG. 12, the carrier circuit board 33 may be further fastened to the second magnet support 42. For example, the second magnet support 42 has a connection body 4211, and the connection body 4211 is connected to the carrier circuit board 33 through the clearance space 324 between the stationary platform 321 and the movable platform 323. To further enhance firmness of connection between the carrier circuit board 33 and the second magnet support 42, in some embodiments, the connection body 4211 may include a connection main portion and a connection rod portion, the connection main portion is bonded to the carrier circuit board 33, and the connection rod portion is inserted into a through hole on the carrier circuit board 33.

As shown in FIG. 12, the filter carrying base 20 is fastened to a side that is of the carrier circuit board 33 and that is away from the main circuit board 32, and the filter carrying base 20 may be bonded to the carrier circuit board 33. The filter carrying base 20 is configured to bear the filter (not shown in the figure). In this case, the filter is disposed opposite to the image sensor 122, and the filter is located on the photosensitive side of the image sensor 122. The filter may be bonded to the filter carrying base 20. The filter carrying base 20 may be of a frame structure, and is disposed around the filter without blocking the image sensor 122.

After light outside the camera module 120 enters an optical component in the image stabilization motor 123, the light may sequentially pass through the filter and the image sensor 122, and finally an optical signal is converted into an image target signal under an action of the image sensor 122. The filter may filter out light of some wavelengths and allow only light of some wavelengths to pass through, and may further protect the image sensor 122 to some extent. For example, the filter may be an infrared filter, which may filter out light of an infrared band and allow light of another band to pass through.

As shown in FIG. 12, the second magnet member 44 is fastened to the second magnet support 42, and the second magnet member 44 may include one or more second magnets. The first magnet member 43 is configured to interact with a coil in the coil circuit board assembly 50, to generate driving force for driving the image sensor 122 to move.

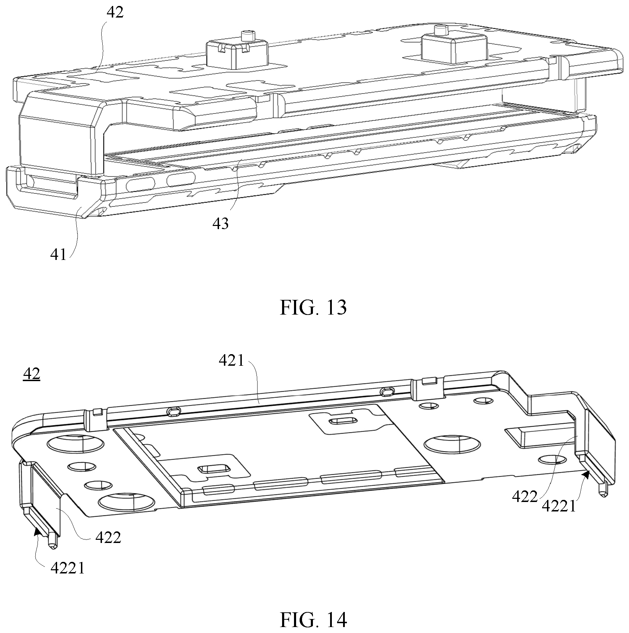

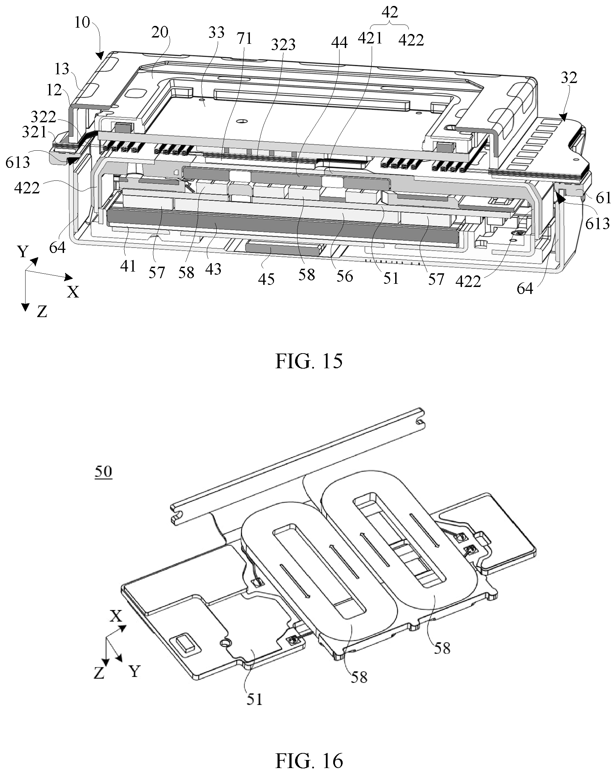

FIG. 13 is a diagram of a three-dimensional structure in which the first magnet support, the second magnet support, and the first magnet member in FIG. 15 are in cooperation with each other.

As shown in FIG. 13, the first magnet member 43 is fastened to the first magnet support 41, and the first magnet member 43 may include one or more first magnets. The second magnet member 44 is configured to interact with a coil in the coil circuit board assembly 50, to generate driving force for driving the image sensor 122 to move.

FIG. 14 is a diagram of a three-dimensional structure of the second magnet support in FIG. 13.

The first magnet support 41 is fastened to the second magnet support 42. For example, to implement fastening of the first magnet support 41 to the second magnet support 42, as shown in FIG. 14, the second magnet support 42 includes a support main body 421 and two connection plate bodies 422. The two connection plate bodies 422 are located at two opposite ends of the support main body 421 in the length direction X of the image stabilization motor 123. In the thickness direction Z of the image stabilization motor 123, one end of the connection plate body 422 is fastened to the support main body 421, and another end of the connection plate body 422 is fastened to the first magnet support 41.

FIG. 15 is a sectional view of the image stabilization motor shown in FIG. 3 from a third viewpoint.

As shown in FIG. 15, the support main body 421 and the first magnet support 41 are spaced apart in the thickness direction Z of the image stabilization motor 123, the support main body 421 is located between the main circuit board 32 and the coil support 61, and the support main body 421 is fastened to the movable platform 323 of the main circuit board 32.

As shown in FIG. 15, the first magnet support 41 is located between the case 62 and the coil support 61. To connect the first magnet support 41 to the second magnet support 42, in some embodiments, the coil support 61 has a through space 613, and the connection plate body 422 is fastened to the first magnet support 41 through the through space 613. The through space 613 is a through hole that penetrates the coil support 61 in the thickness direction Z of the image stabilization motor 123, and the connection plate body 422 is fastened to the first magnet support 41 through the through hole. The through space 613 is in a one-to-one correspondence with the connection plate body 422. For example, as shown in FIG. 15, there are two connection plate bodies 422, and correspondingly, there are two through spaces 613.

At least a part of the second magnet support 42 and the first magnet support 41 are spaced apart in the thickness direction Z of the image stabilization motor 123. For example, as shown in FIG. 15, a part of the second magnet support 42 and the first magnet support 41 are spaced apart in the thickness direction Z of the image stabilization motor 123. As shown in FIG. 15, the first magnet support 41 and the second magnet support 42 may form a ring structure. In this case, the coil circuit board assembly 50 is located inside the ring structure formed by the first magnet support 41 and the second magnet support 42. In other words, the coil circuit board assembly 50 is located between the first magnet support 41 and the second magnet support 42.

For example, to ensure strength of the first magnet support 41 and the second magnet support 42 and control weights of the first magnet support 41 and the second magnet support 42, both the first magnet support 41 and the second magnet support 42 are made of two materials: a metal material and plastic. The metal material forms frameworks of the first magnet support 41 and the second magnet support 42, and injection molding is further used to form the first magnet support 41 and the second magnet support 42.

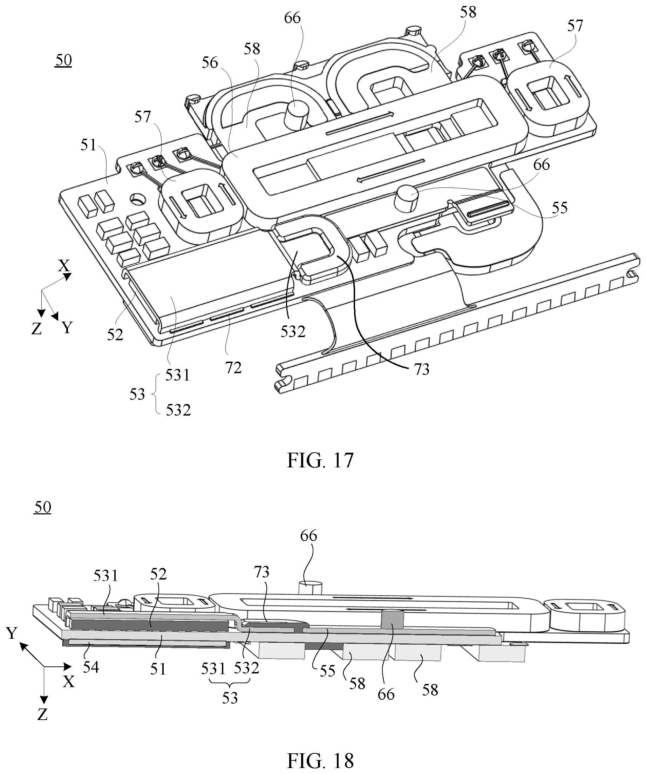

FIG. 16 is a diagram of a three-dimensional structure of the coil circuit board assembly in FIG. 3 from a first viewpoint. FIG. 17 is a diagram of a three-dimensional structure of the coil circuit board assembly in FIG. 3 from a second viewpoint.

Still refer to FIG. 15, and refer to FIG. 16 and FIG. 17. The coil circuit board assembly 50 may include a coil circuit board 51, a first coil 56, a second coil 57, a third coil 58, an integrated circuit (IC) 52, and a shielding cover 53. The coil circuit board 51 is fastened to the coil support 61, and is electrically connected to the stationary platform 321 of the main circuit board 32. The first coil 56, the second coil 57, the shielding cover 53, and the integrated circuit 52 are all located on a side that is of the coil circuit board 51 and that is away from the main circuit board 32. The first coil 56, the second coil 57, and the integrated circuit 52 are separately electrically connected to the coil circuit board 51. The shielding cover 53 and the coil circuit board 51 are fastened together, and enclose an accommodation space for accommodating the integrated circuit 52. The third coil 58 is located on a side that is of the coil circuit board 51 and that is close to the main circuit board 32, and is electrically connected to the coil circuit board 51.

Still refer to FIG. 15. To enable the first magnet member 43 to interact with the first coil 56 to generate driving force and enable the first magnet member 43 to interact with the second coil 57 to generate driving force, the first magnet member 43, the first coil 56, and the second coil 57 are all located between the coil circuit board 51 and the first magnet support 41. To enable the third coil 58 to interact with the second magnet member 44 to generate driving force, the coil support 61 has a mounting through hole, the third coil 58 is located inside the mounting through hole, and the second magnet member 44 is located between the third coil 58 and the support main body 421 of the second magnet support 42.

Refer to FIG. 16. There are two third coils 58, and the third coils 58 interact with the second magnet to generate driving force for driving the image sensor 122 to move along an X-axis.

Refer to FIG. 17. There is one first coil 56 and two second coils 57, and the first coil 56 is located between the two second coils 57 in the length direction X of the image stabilization motor 123. The first coil 56 and the second coils 57 all interact with the first magnet member 43. The first coil 56 interacts with the first magnet member 43 to generate driving force for driving the image sensor 122 to move along a Y-axis, and the two second coils 57 interact with the first magnet member 43 to generate driving force for driving the image sensor 122 to rotate around a Z-axis.

In some examples, the coil circuit board 51 is a flexible circuit board, and the integrated circuit (IC) 52 is electrically connected to the coil circuit board 51 through soldering. In other words, there is a solder joint between the integrated circuit 52 and the coil circuit board 51. However, when the image stabilization motor 123 shakes or the mover 80 collides with the stator 90, the coil circuit board 51 deforms due to impact of stress. If the coil circuit board 51 deforms excessively, the solder joint between the integrated circuit 52 and the coil circuit board 51 detaches, and consequently, the image stabilization motor 123 cannot work normally.

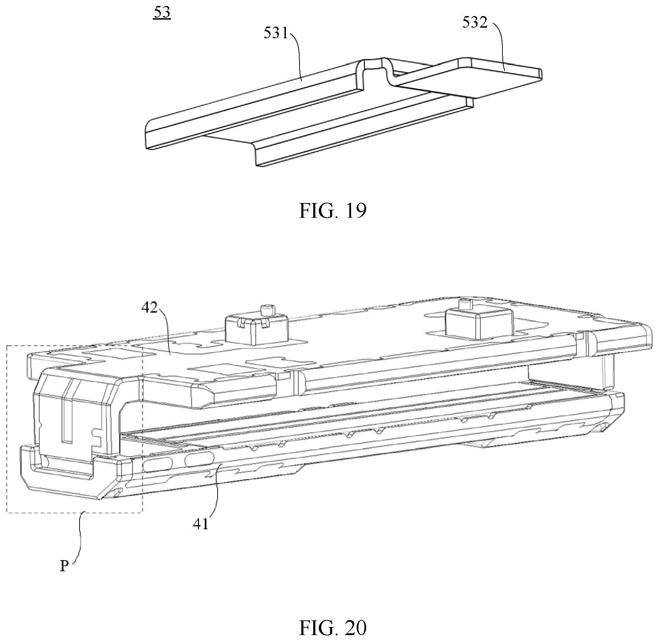

Still refer to FIG. 17, and refer to FIG. 18 and FIG. 19. FIG. 18 is a sectional view of the coil circuit board assembly shown in FIG. 16. FIG. 19 is a diagram of a three-dimensional structure of the shielding cover in FIG. 16.

To further enhance firmness of the solder joint between the integrated circuit 52 and the coil circuit board 51, in some possible implementations, the shielding cover 53 may include a shielding body 531 and a lug plate 532. The shielding body 531 and the lug plate 532 are located on a same side of the coil circuit board 51, the shielding body 531 and the coil circuit board 51 enclose an accommodation space for accommodating the integrated circuit 52, an end of the lug plate 532 is fastened to the shielding body 531, and the lug plate 532 is located outside the accommodation space and is attached to the coil circuit board 51.

Attachment of the lug plate 532 to the coil circuit board 51 can enhance strength of the coil circuit board 51, and avoid excessive deformation of the coil circuit board 51, to avoid detachment of the solder joint between the coil circuit board 51 and the integrated circuit 52. In addition, the integrated circuit 52 is located in the shielding body 531, and the shielding body 531 may also transfer stress near the integrated circuit 52 from the coil circuit board 51 to the lug plate 532, to avoid excessive deformation of a part of the coil circuit board 51 near the integrated circuit 52, so as to avoid detachment of the solder joint between the integrated circuit 52 and the coil circuit board 51.

In some embodiments, the shielding body 531 may include a first plate portion, two first branch plate portions, and a second branch plate portion. The integrated circuit 52 is located between the first plate portion and the coil circuit board 51 in the thickness direction Z of the image stabilization motor 123. The two first branch plate portions are respectively located on two sides of the first plate portion that face away from each other. One end of the first branch plate portion is fastened to the first plate portion, and another end of the first branch plate portion is fastened to the coil circuit board 51. The second branch plate portion is located on a same side of the first plate portion as the first branch plate portions, and is located between the two first branch plate portions. One end of the second branch plate portion is fastened to the first plate portion, and another end of the second branch plate portion is fastened to the lug plate 532.

In some embodiments, the shielding body 531 may be bonded to the coil circuit board 51. As shown in FIG. 17, a first adhesive bonding member 72 is disposed between the first branch plate portion and the coil circuit board 51. In addition to connecting the coil circuit board 51 to the coil circuit board 51, the first adhesive bonding member 72 can further enhance strength of the coil circuit board 51, to help reduce a degree of deformation of the coil circuit board 51.

Refer to FIG. 17 and FIG. 18. To closely attach the lug plate 532 to the coil circuit board 51, the image stabilization motor 123 further includes a second adhesive bonding member 73. A part of the second adhesive bonding member 73 covers a surface of the lug plate 532, a part of the second adhesive bonding member 73 covers a surface of the coil circuit board 51, and the coil circuit board 51 is fastened to the lug plate 532 through the second adhesive bonding member 73. To further enhance connection strength of the second adhesive bonding member 73, an orthographic projection of the second adhesive bonding member 73 onto the coil circuit board 51 is U-shaped, and the second adhesive bonding member 73 covers an edge of the lug plate 532.

For example, the integrated circuit 52 may include a substrate layer, a device layer, an interconnection layer, a packaging layer, and a solder joint.

To further protect the solder joint between the integrated circuit 52 and the coil circuit board 51, in some embodiments, as shown in FIG. 18, the stator 90 further includes a first reinforcement plate 54. The first reinforcement plate 54 is fastened to a side that is of the coil circuit board 51 and that is away from the integrated circuit 52, and at least a part of an orthographic projection of the integrated circuit 52 onto the coil circuit board 51 is within an orthographic projection of the first reinforcement plate 54 onto the coil circuit board 51. It can be learned that, at least a part of the first reinforcement plate 54 is located directly below the integrated circuit 52. This can enhance strength of a part that is of the coil circuit board 51 and that is in plate connection to the integrated circuit 52, and avoid excessive deformation of the coil circuit board 51, to avoid detachment of the solder joint between the integrated circuit 52 and the coil circuit board 51.

To fasten the first reinforcement plate 54 to the coil circuit board 51, in some embodiments, the image stabilization motor 123 may further include a third adhesive bonding member. The third adhesive bonding member is located between the first reinforcement plate 54 and the coil circuit board 51, and is separately bonded to the first reinforcement plate 54 and the coil circuit board 51.

In addition to coexistence of the first reinforcement plate 54 with the shielding cover 53 having the lug plate 532, in some scenarios, alternatively, the first reinforcement plate 54 may be disposed alone, to protect the solder joint. Alternatively, in some scenarios, the shielding cover 53 having the lug plate 532 may be disposed alone, to protect the solder joint.

In some possible implementations, as shown in FIG. 18, the stator 90 further includes a second reinforcement plate 55, the second reinforcement plate 55 and the first reinforcement plate 54 are located on a same side of the coil circuit board 51, the second reinforcement plate 55 is attached to the coil circuit board 51, and an end of the second reinforcement plate 55 is close to the lug plate 532. This can further enhance strength of the coil circuit board 51, to control deformation of the coil circuit board 51 within an appropriate range.

In some embodiments, as shown in FIG. 18, a part of the second adhesive bonding member 73 covers a surface of the end of the second reinforcement plate 55, and the second reinforcement plate 55 is fastened to the coil circuit board 51 through the second adhesive bonding member 73. In addition, the end of the second reinforcement plate 55 may alternatively be welded to the first metal support 611 of the coil support 61, to fasten the second reinforcement plate 55 to the coil circuit board 51.

When the image stabilization motor 123 works, the mover 80 collides with the stator 90, the first magnet support 41 and the second magnet support 42 of the mover 80 separately collide with the case 62 of the stator 90 in the length direction X of the image stabilization motor 123, and the second magnet support 42 of the mover 80 collides with the coil support 61 of the stator 90 in the width direction Y of the image stabilization motor 123. As described above, the second magnet support 42 is made of the metal material and the plastic material, to reduce the weight of the second magnet support 42, and implement a lightweight design of the image stabilization motor 123. In this case, the connection plate body 422 of the second magnet support 42 is made of the metal material and the plastic material. The connection plate body 422 has low strength, and the connection plate body 422 is likely to deform after a plurality of collisions with the case 62. As a result, a welding position between the connection plate body 422 and the first magnet support 41 cracks, and a position of the first magnet member 43 changes.

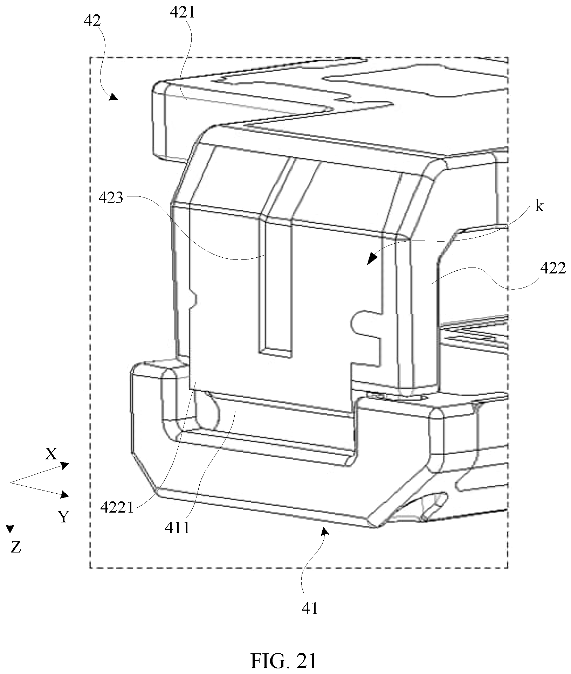

FIG. 20 is a diagram of a structure in which the second magnet support and the first magnet support are in other cooperation with each other according to an embodiment of this application. FIG. 21 is an enlarged view of a position P in FIG. 20.

In some possible implementations, at least a part of an end surface of an end that is of the connection plate body 422 and that faces the stator 90 in the length direction X of the image stabilization motor 123 is made of metal. For example, as shown in FIG. 21, a part (for example, k in FIG. 21) of an end surface of an end that is of the connection plate body 422 and that faces the case 62 in the length direction X of the image stabilization motor 123 is made of metal. In this way, in a procedure in which the connection plate body 422 collides with the stator 90, a surface that is of the connection plate body 422 and that collides with the stator 90 is made of metal, and in comparison with plastic of which a surface that is of the connection plate body 422 and that collides with the stator 90 is made in FIG. 15, strength of the metal is higher than strength of the plastic, and the metal is not likely to deform, so that a risk of deformation of the connection plate body 422 can be reduced, and the connection plate body 422 has a strong deformation resistance capability.

In some possible implementations, as shown in FIG. 21, a stiffener structure 423 forming a reinforcing stiffener is disposed on the connection plate body 422 of the second magnet support 42, so that the connection plate body 422 has high strength, to reduce a risk of deformation of the connection plate body 422, and avoid deformation of the connection plate body 422.

As shown in FIG. 21, one stiffener structure 423 is disposed on the connection plate body 422. Alternatively, a plurality of stiffener structures 423 may be disposed on the connection plate body 422. In addition, as shown in FIG. 21, an extension direction of the stiffener structure 423 is parallel to the thickness direction Z of the image stabilization motor 123. Alternatively, the extension direction of the stiffener structure 423 may be perpendicular to the thickness direction Z of the image stabilization motor 123, or intersect with the thickness direction Z of the image stabilization motor 123.

It may be understood that, the stiffener structure 423 is disposed on the metal material of the connection plate body 422, and the metal material of the connection plate body 422 may be stamped to form the stiffener structure 423.

In some possible implementations, as shown in FIG. 21, the first magnet support 41 includes a first metal portion 411, an end that is of the connection plate body 422 and that is away from the support main body 421 includes a second metal portion 4221, and the second metal portion 4221 is welded to the first metal portion 411, to fasten the first magnet support 41 to the second magnet support 42. In the length direction X of the image stabilization motor 123, at least a part of an orthographic projection of a part that is of the second metal portion 4221 and that is opposite to the first metal portion 411 onto the first metal portion 411 is within the first metal portion 411, so that a width of welding between the first metal portion 411 and the second metal portion 4221 is increased, and the first metal portion 411 is used to support the second metal portion 4221, to enhance the deformation resistance capability of the connection plate body 422.

In some embodiments, in the length direction X of the image stabilization motor 123, the first metal portion 411 is located on a side that is of the second metal portion 4221 and that is away from the case 62, and overlaps the second metal portion 4221. In some other embodiments, alternatively, the first metal portion 411 may be located on a side that is of the second metal portion 4221 and that is close to the case 62, and overlap the second metal portion 4221. In still some other embodiments, the first metal portion 411 and the second metal portion 4221 may alternatively not overlap in the length direction X of the image stabilization motor 123.

It may be understood that, a larger width of welding between the first metal portion 411 and the second metal portion 4221 in the width direction Y of the image stabilization motor 123 indicates better firmness of connection between the first metal portion 411 and the second metal portion 4221 and better support provided by the first metal portion 411 for the second metal portion 4221, so that a deformation resistance capability of the second metal portion 4221 is better, and therefore the deformation resistance capability of the connection plate body 422 is better.

In some embodiments, as shown in FIG. 21, widths of the first metal portion 411 and the second metal portion 4221 in the width direction Y of the image stabilization motor 123 are the same. In some other embodiments, the widths of the first metal portion 411 and the second metal portion 4221 in the width direction Y of the image stabilization motor 123 may alternatively be different.

In some possible implementations, as shown in FIG. 21, central lines of the first metal portion 411 and the second metal portion 4221 in the width direction Y of the image stabilization motor 123 coincide. The coincidence of the central lines of the first metal portion 411 and the second metal portion 4221 means that the first metal portion 411 and the second metal portion 4221 are centrally disposed, to maximize a width of welding between the first metal portion 411 and the second metal portion 4221, so as to further enhance the deformation resistance capability of the second metal portion 4221, and further enhance the deformation resistance capability of the connection plate body 422.

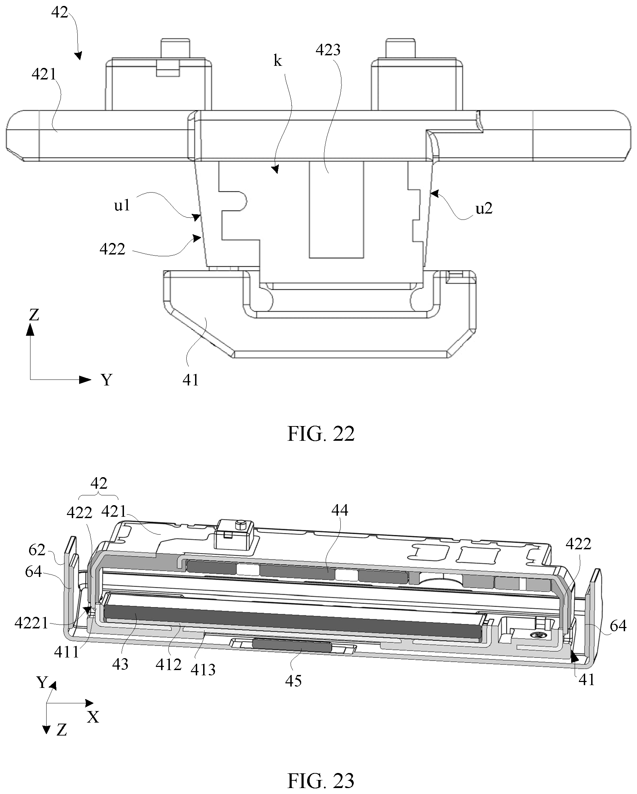

FIG. 22 is a left view in which the second magnet support and the first magnet support are in still other cooperation with each other according to an embodiment of this application.

In some possible implementations, as shown in FIG. 22, a width of the connection plate body 422 in the width direction Y of the image stabilization motor 123 gradually decreases in a direction from the support main body 421 to the first magnet support 41, and each of two end surfaces of the connection plate body 422 in the width direction Y of the image stabilization motor 123 is an inclined surface (as shown by u1 in FIG. 22) inclined to the thickness direction Z of the image stabilization motor 123. It can be learned that, an orthographic projection of the connection plate body 422 onto a reference plane is similar to an isosceles trapezoid, and the reference plane is a plane containing the width direction Y and the thickness direction Z of the image stabilization motor 123.

During manufacturing of the second magnet support 42, a draft design is applied to the connection plate body 422, so that the two end surfaces of the connection plate body 422 in the width direction Y of the image stabilization motor 123 are inclined surfaces. This can reduce an area of collision between the connection plate body 422 and the coil support 61 in the width direction Y of the image stabilization motor 123, and can reduce a risk of deformation of the connection plate body 422. In addition, a surface that is of the connection plate body 422 and that collides with the coil support 61 in the width direction Y of the image stabilization motor 123 is made of plastic. Reducing an area of collision between the plastic and the coil support 61 can also reduce tiny particles generated due to collision.

It should be noted that, in addition to setting the end surface that is of the connection plate body 422 and that collides with the coil support 61 as an inclined surface, in some scenarios, alternatively, a surface that is of the coil support 61 and that collides with the connection plate body 422 may be reduced in size in the thickness direction Z of the image stabilization motor 123 or set as an inclined surface. This can also reduce the area of collision between the coil support 61 and the connection plate body 422.

In conclusion, deformation of the connection plate body 422 can be reduced by using at least one of the following manners: the metal material of the connection plate body 422 is exposed, the stiffener structure 423 is disposed, the projections of the first metal portion 411 and the second metal portion 4221 at least partially overlap, the two end surfaces of the connection plate body 422 are set as inclined surfaces, or the like. When more manners are used, better effect is achieved on the connection plate body 422.

FIG. 23 is a sectional view in which a first flexible member is disposed on two sides that are of the first magnet support and the second magnet support and that face away from each other.

In some possible implementations, as shown in FIG. 23, the first magnet support 41 includes a first magnetic conductive sheet 412 and a second magnetic conductive sheet 413, the first magnetic conductive sheet 412 is located between the first magnet member 43 and the second magnetic conductive sheet 413, and the first magnet member 43 is a Halbach magnet array. The design of combining the Halbach magnet array and the two magnetic conductive sheets can achieve small restoring force. This means that when power supply to the image stabilization motor 123 stops, interaction force between magnets is small, which reduces rebound or vibration and enhances control accuracy. Small restoring force helps the image stabilization motor 123 reach a target position and stabilize more quickly, which is particularly important for the image stabilization motor 123 that needs a quick response.

In some possible implementations, as shown in FIG. 23, the stator 90 further includes a third magnet member 45. In the thickness direction Z of the image stabilization motor 123, the third magnet member 45 is located on a side that is of the second magnetic conductive sheet 413 and that is away from the first magnetic conductive sheet 412, and the third magnet member 45 is spaced apart from the second magnetic conductive sheet 413. The third magnet member 45 is magnetically attracted to the second magnetic conductive sheet 413. This means that magnetic attraction force exists between the third magnet member and the second magnetic conductive sheet. In addition, because a position of the third magnet member 45 remains unchanged, the magnetic attraction force pulls the first magnet support 41, so that the first magnet support 41 does not accidentally move toward the image sensor 122. In addition, the Halbach magnet array and the two magnetic conductive sheets form a strong magnetic attraction structure, which is insensitive to a distance between the third magnet member 45 and the second magnetic conductive sheet 413 in the thickness direction Z of the image stabilization motor 123, so that assembly and commissioning are convenient. Therefore, there is no need to separately dispose a magnetic conductive sheet that cooperates with the third magnet member 45.

The third magnet member 45 may include one or more third magnets. This is not limited herein.

For example, as shown in FIG. 23, the third magnet member 45 may be fastened to an inner wall of the case 62. For example, the third magnet member 45 is bonded to the inner wall of the case 62.

When the image stabilization motor 123 works, when the mover 80 collides with the stator 90, an abnormal sound is generated. In other words, noise occurs. The abnormal sound affects user experience, and may be captured by a voice recording device during video shooting, affecting audio quality. In addition, collision between the mover 80 and the stator 90 in the length direction X of the image stabilization motor 123 is hard-on-hard collision, which may generate tiny particles, affecting reliability of the image stabilization motor 123 and imaging quality of the image sensor 122.

During working of the image stabilization motor 123, the mover 80 collides with the stator 90 in the length direction X of the image stabilization motor 123. Therefore, in some possible implementations, with reference to FIG. 23, the stator 90 further includes a first flexible member 64, and the first flexible member 64 is disposed on each of two sides of the mover 80 that face away from each other in the length direction X of the image stabilization motor 123. The first flexible member 64 is disposed between the mover 80 and the stator 90. When moving toward the stator 90 in the length direction X of the image stabilization motor 123, the mover 80 collides with the first flexible member 64. The first flexible member 64 performs a cushioning function, to reduce or eliminate an abnormal sound of collision, and avoid occurrence of tiny particles, so as to enhance image quality.

A specific material of the first flexible member 64 is not limited herein. For example, the first flexible member 64 may be made of silicone.

As shown in FIG. 23, the first flexible member 64 is fastened to an inner wall of the case 62. Certainly, the first flexible member 64 may alternatively be mounted on a component in the stator 90 other than the case 62 in a fixed manner.

In some embodiments, as shown in FIG. 23, the first flexible member 64 may be bonded to the case 62. In some other embodiments, the first flexible member 64 may alternatively be formed on the case 62 through injection molding, so that the first flexible member 64 and the case 62 form an integrated structure.

In addition to being integrated into the stator 90, in some scenarios, the first flexible member 64 may alternatively be integrated into the mover 80. Integrating the first flexible member 64 into the stator 90 can reduce a weight of the mover 80, and reduce difficulty in movement of the mover 80.

During working of the image stabilization motor 123, a component that is of the mover 80 and that collides with the stator 90 in the length direction X of the image stabilization motor 123 may be the first magnet support 41 and/or the second magnet support 42. Therefore, in some possible implementations, the first flexible member 64 faces at least one of the first magnet support 41 and the second magnet support 42 in the length direction X of the image stabilization motor 123. For example, as shown in FIG. 23, the first flexible member 64 faces the first magnet support 41 and the second magnet support 42. The first flexible member 64 is disposed on two sides that are of the first magnet support 41 and/or the second magnet support 42 and that face away from each other, so that collision between the stator 90 and the first magnet support 41 and/or the second magnet support 42 is soft-on-hard collision, to alleviate or eliminate an abnormal sound of collision, and avoid generation of tiny particles.

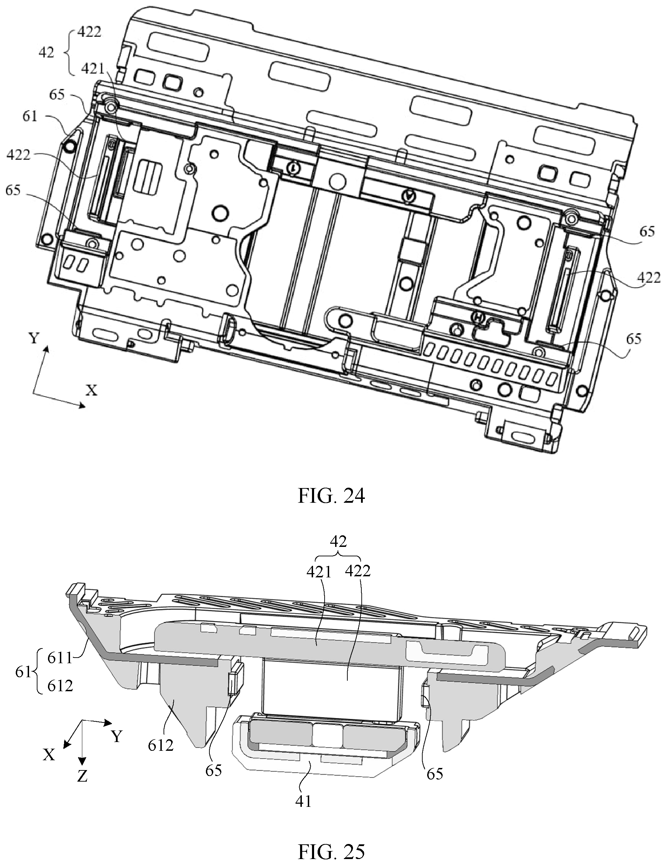

FIG. 24 is a diagram of a three-dimensional structure in which a second flexible member is disposed on the coil support. FIG. 25 is a sectional view in which the second flexible member is in cooperation with the coil support, the first magnet support, and the second magnet support.

During working of the image stabilization motor 123, the mover 80 collides with the stator 90 in the width direction Y of the image stabilization motor 123. Therefore, in some possible implementations, with reference to FIG. 24 and FIG. 25, the stator 90 further includes a second flexible member 65, the second flexible member 65 is fastened to the coil support 61, and the second flexible member 65 is disposed on each of two sides of the mover 80 that face away from each other in the width direction Y of the image stabilization motor 123. The second flexible member 65 is disposed between the mover 80 and the stator 90. When moving toward the stator 90 in the width direction Y of the image stabilization motor 123, the mover 80 collides with the second flexible member 65. The second flexible member 65 performs a cushioning function, to reduce or eliminate an abnormal sound of collision, and avoid occurrence of tiny particles.

A specific material of the second flexible member 65 is not limited herein. For example, the second flexible member 65 may be made of silicone.

In some embodiments, as shown in FIG. 25, the second flexible member 65 is formed on the coil support 61 through injection molding, so that the second flexible member 65 and the coil support 61 form an integrated structure. In some other embodiments, the second flexible member 65 may be bonded to the coil support 61.

It should be noted that, in addition to being integrated into the stator 90, in some scenarios, the second flexible member 65 may alternatively be integrated into the mover 80. Integrating the second flexible member 65 into the stator 90 can reduce the weight of the mover 80, and reduce difficulty in movement of the mover 80.

During working of the image stabilization motor 123, a specific component that is of the mover 80 and that collides with the stator 90 in the width direction Y of the image stabilization motor 123 is usually the first magnet support 41 and/or the second magnet support 42. Therefore, in some possible implementations, the second flexible member 65 faces at least one of the first magnet support 41 and the second magnet support 42 in the width direction Y of the image stabilization motor 123. For example, as shown in FIG. 25, the second flexible member 65 faces the second magnet support 42. The second flexible member 65 is disposed on two sides that are of the first magnet support 41 and/or the second magnet support 42 and that face away from each other, so that collision between the stator 90 and the first magnet support 41 and/or the second magnet support 42 is soft-on-hard collision, to alleviate or eliminate an abnormal sound of collision, and avoid generation of tiny particles.

For example, as shown in FIG. 25, the coil support 61 collides with the connection plate body 422 of the second magnet support 42. Therefore, the second flexible member 65 faces the connection plate body 422 of the second magnet support 42. A spacing between the second flexible member 65 and the connection plate body 422 in the width direction Y of the image stabilization motor 123 is less than a spacing between the coil support 61 and the connection plate body 422, and the spacing between the second flexible member 65 and the connection plate body 422 in the width direction Y of the image stabilization motor 123 is less than a spacing between the coil support 61 and the first magnet support 41.

As described above, the coil support 61 includes the first metal support 611 and the first injection molded part 612. When a lightweight design of the coil support 61 is implemented, overall rigidity of the coil support 61 is low. As a result, during running of the image stabilization motor 123, the low-rigidity coil support 61 causes a problem of background noise (that is, low-frequency noise or vibration). Background noise may be generated due to the following reasons.

I. The low-rigidity coil support 61 is more likely to resonate. When a natural frequency of the support is close to an external excitation frequency (for example, a motor drive frequency), resonance occurs, resulting in large vibration amplitude. The resonance is transmitted to an entire system, resulting in obvious background noise. II. The low-rigidity coil support 61 is prone to deformation or displacement when being subject to force. In the image stabilization motor 123, a coil needs to move accurately to counteract hand vibration. If the support is not rigid enough, coil movement is not accurate enough, leading to extra vibration and noise. III. The low-rigidity coil support 61 affects control accuracy of a system. The image stabilization motor 123 usually relies on a high-precision position sensor and a feedback control system to implement fast and accurate adjustment. If the support is not rigid enough, a position feedback signal is unstable, and it is difficult for the control system to accurately control a coil position. Consequently, background noise is increased. IV. The low-rigidity coil support 61 may generate more mechanical losses during movement, such as friction and deformation. These losses lower system efficiency, and also generate additional vibration and noise. V. In some cases, the low-rigidity coil support 61 may cause a change in relative positions of the coil and a magnet, affecting distribution of an electromagnetic field. The change may cause electromagnetic interference, further increasing background noise.

To alleviate the problem of background noise caused by the low-rigidity coil support 61, the following measures may be taken for improvement.

In some possible implementations, the case 62 is located on a side that is of the coil support 61 and that is away from the stationary platform 321 in the thickness direction Z of the image stabilization motor 123, and the case 62 is welded to the coil support 61. For example, the case 62 may be welded to the first metal support 611 of the coil support 61. The case 62 is used to support the coil support 61, so that rigidity of the coil support 61 can be increased. This can effectively alleviate the problem of background noise caused by the low-rigidity coil support 61, to optimize running background noise.

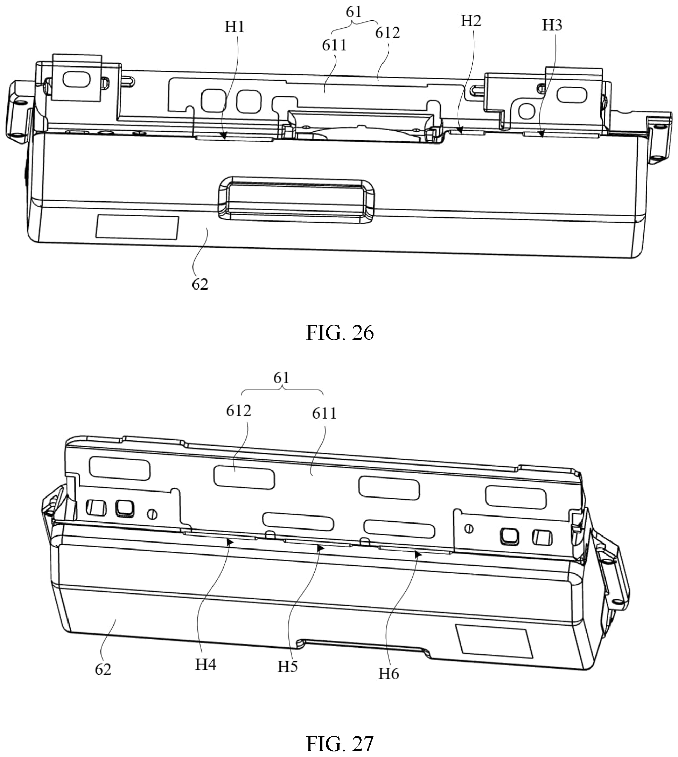

FIG. 26 is a diagram, from a first viewpoint, in which the coil support and the case in FIG. 3 are connected to each other. FIG. 27 is a diagram, from a second viewpoint, in which the coil support and the case in FIG. 3 are connected to each other.

A specific position of welding between the first metal support 611 and the case 62 is not limited herein. For example, as shown in FIG. 26, three welding positions (as shown by H1, H2, and H3 in FIG. 26) spaced in the length direction of the image stabilization motor 123 exist between one side of the case 62 and the first metal support 611. Three welding positions (as shown by H4, H5, and H6 in FIG. 27) spaced in the length direction of the image stabilization motor 123 exist between another side of the case 62 and the first metal support 611.

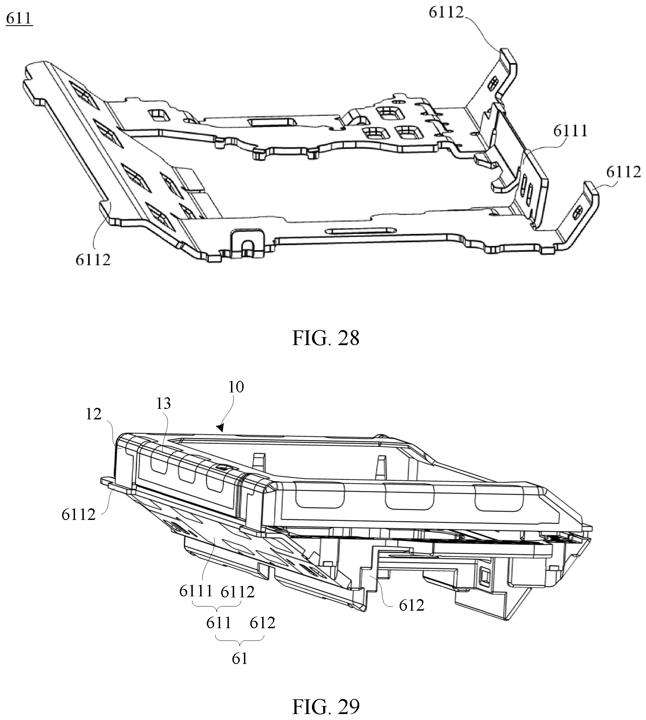

FIG. 28 is a diagram of a three-dimensional structure of the first metal support in FIG. 5.

In some possible implementations, as shown in FIG. 28, the first metal support 611 is of an integrated structure. The first metal support 611 of the integrated structure serves as a metal framework. The first metal support 611 has high rigidity, and can increase rigidity of the first injection molded part 612, so that rigidity of the coil support 61 can be increased, to optimize running background noise.

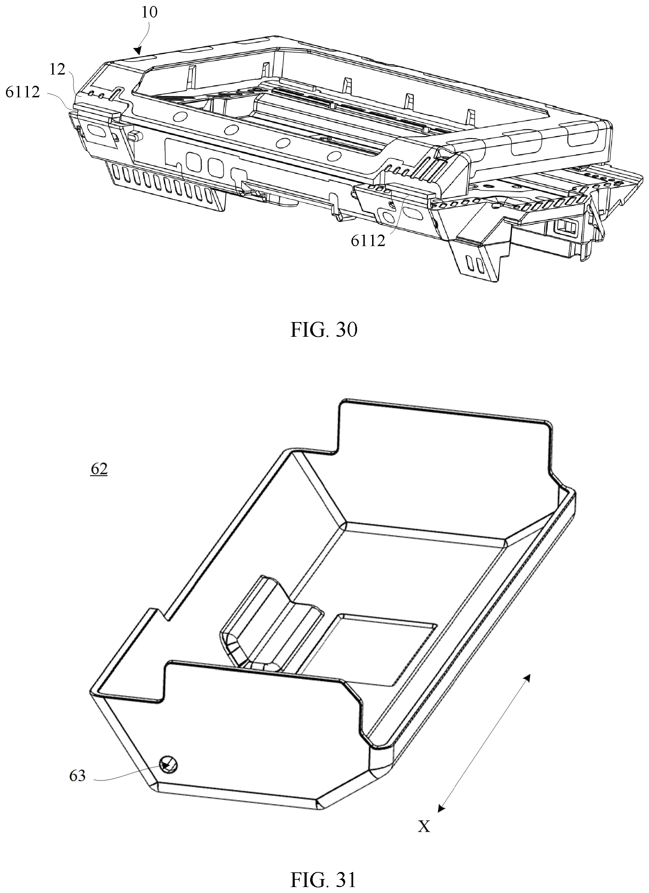

FIG. 29 is a diagram, from a first viewpoint, in which the coil support and the cover in FIG. 3 are connected to each other. FIG. 30 is a diagram, from a second viewpoint, in which the coil support and the cover in FIG. 3 are connected to each other.

In some possible implementations, as shown in FIG. 29, the coil support 61 includes the first metal support 611 and the first injection molded part 612. As shown in FIG. 28, the first metal support 611 includes a metal main portion 6111 and a metal bent portion 6112, at least a part of the metal main portion 6111 is embedded inside the first injection molded part 612, and the metal bent portion 6112 is fastened to the cover 10. Bending the first metal support 611 to form the metal bent portion 6112 connected to the second metal support 12 of the cover 10 can increase rigidity of the first metal support 611, and further increase rigidity of the first injection molded part 612, so that the coil support 61 has high rigidity. This can effectively alleviate the problem of background noise caused by the low-rigidity coil support 61.

With reference to FIG. 29 and FIG. 30, it can be learned that, the metal bent portion 6112 is disposed on each of two sides of the metal main portion 6111 that face away from each other, so that two sides of the first metal support 611 that face away from each other are respectively welded to two sides of the second metal support 23 that face away from each other.

Generally, during assembly of the image stabilization motor 123, tiny particles exist inside the image stabilization motor 123, leading to a particle problem that affects running of the mover 80 and/or photosensitive performance of the image sensor 122 and degrades imaging quality. The "particle" problem generally refers to impact of tiny particles on motor performance. The following measures may be taken to alleviate the particle problem.

FIG. 31 is a diagram of a three-dimensional structure of the case in FIG. 3.

In some possible implementations, as shown in FIG. 31, the case 62 serves as a partial cavity wall of the accommodation cavity 91 and has a washing hole 63, and the washing hole 63 communicates with the inside of the accommodation cavity 91. In this way, the washing hole 63 may serve as a through hole for liquid or gas to enter the image stabilization motor 123, allowing for internal cleaning using deionized water, compressed air, or a corresponding cleaning agent, to directly remove particles attached to the mover 80, the stator 90, and the suspension wire 322. Therefore, the properly designed washing hole 63 can effectively resolve the particle problem inside the image stabilization motor 123, to enhance overall performance and reliability of the image stabilization motor 123.

It may be understood that, after the cleaning is completed, a cleaning medium is discharged through the washing hole 63, to ensure that the inside is dry. In addition, after the cleaning medium is discharged, the washing hole 63 needs to be sealed. For example, the washing hole 63 is sealed by using sealant.

A specific shape of the washing hole 63 is not limited herein. For example, the washing hole 63 may be a circular hole.

In some embodiments, as shown in FIG. 31, the washing hole 63 is located on a side of the case 62 in the length direction X of the image stabilization motor 123. In some other embodiments, the washing hole 63 may alternatively be located on a side of the case 62 in the width direction Y of the image stabilization motor 123. In still some other embodiments, the washing hole 63 may alternatively be located at a part that is of the case 62 and that is opposite to the first magnet support 41 in the thickness direction Z of the image stabilization motor 123.

In some embodiments, in the thickness direction Z of the image stabilization motor 123, a distance between the washing hole 63 and a bottom surface that is of the case 62 and that is away from the suspension wire 322 is less than or equal to one third of a thickness of the image stabilization motor 123. This can reduce difficulty in discharging a cleaning medium used in a washing process from the inside of the image stabilization motor 123, and can enhance washing effect.

In some possible implementations, the image stabilization motor 123 further includes an adhesive member (not shown in the figure). The adhesive member may be disposed at a position at which the mover 80 collides with the stator 90. Certainly, the adhesive member is not limited to be disposed at the position at which the mover 80 collides with the stator 90. Because the adhesive member is an adhesive with low viscosity, and fluidity of the adhesive member is poor, the adhesive member may stay at a specific position for a long time. Tiny particles may be absorbed into the adhesive member, to prevent the tiny particles from flowing inside the image stabilization motor 123.

A specific type of the adhesive member is not limited herein. For example, the adhesive member may be a dust-catching adhesive.

In some embodiments, the adhesive member is disposed on a surface of at least one of the coil support 61, the cover 10, and the coil circuit board assembly 50. For example, the adhesive member is disposed on a surface of each of the coil support 61, the cover 10, and the coil circuit board assembly 50.

A position at which the adhesive member is disposed on the coil support 61 is not specifically limited herein. For example, the adhesive member is disposed at a position that is on the coil support 61 and that collides with the support main body 421 of the second magnet support 42 in a direction perpendicular to the thickness direction Z of the image stabilization motor 123. For example, the adhesive member may be disposed on surfaces that are of the coil support 61 and that collide with the second magnet support 42 in the length direction X and the width direction Y of the image stabilization motor 123.

A specific position at which the adhesive member is disposed on the cover 10 is not limited herein. For example, the adhesive member may be disposed on a surface that is of the cover 10 and that is opposite to the second magnet support 42 in a direction perpendicular to the thickness direction Z of the image stabilization motor 123.

A position at which the adhesive member is disposed on the coil circuit board assembly 50 is not limited herein. For example, the adhesive member may be disposed on a surface of the shielding cover 53, a surface of the second reinforcement plate 55, or the like.

To enhance control performance of the image stabilization motor 123, in some possible implementations, the image stabilization motor 123 may further include at least one of the following damping members: a first damping member 66, a second damping member 67, and a third damping member 68. For example, the image stabilization motor 123 includes the first damping member 66, the second damping member 67, and the third damping member 68. There may be one or more first damping members 66. For example, there are two first damping members 66. There may be one or more second damping members 67. For example, there are two second damping members 67. There may be one or more third damping members 68. For example, there are two third damping members 68.

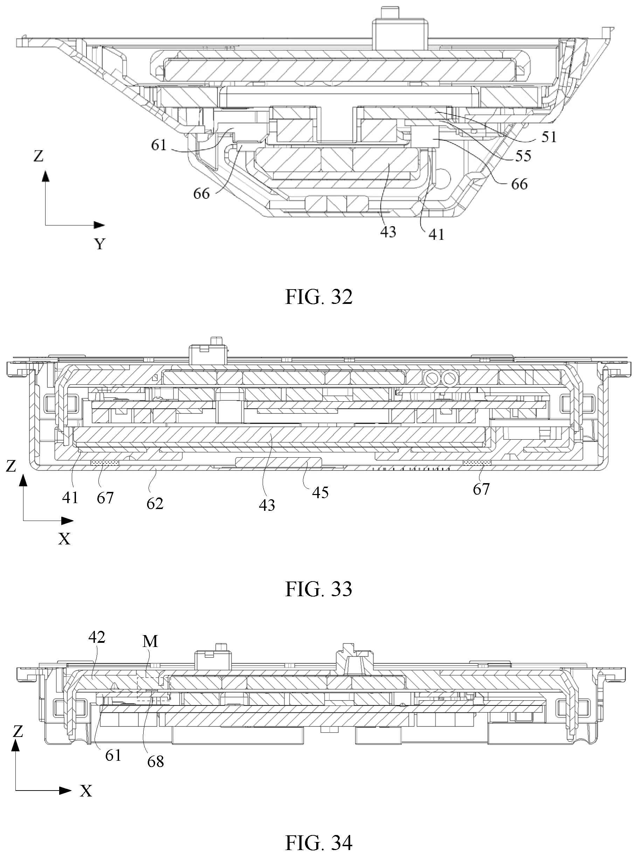

FIG. 32 is a sectional view in which the first damping member and the first magnet support in FIG. 16 are in cooperation with each other.

As shown in FIG. 32, in the thickness direction Z of the image stabilization motor 123, the first damping member 66 is located between the first magnet support 41 and the support main body 421 of the second magnet support 42, one end of the first damping member 66 is in contact with the first magnet support 41, and another end of the first damping member 66 is in contact with the coil circuit board assembly 50 or the coil support 61.

For example, as shown in FIG. 32, there may be two first damping members 66, two ends of one first damping member 66 are respectively in contact with the first magnet support 41 and the second reinforcement plate 55 of the coil circuit board assembly 50, and two ends of the other first damping member 66 are respectively in contact with the first magnet support 41 and the coil support 61.

It should be noted that, in addition to the second reinforcement plate 55, a specific component that is of the coil circuit board assembly 50 and that is in contact with the first damping member 66 may alternatively be the shielding cover 53, the first coil 56, the second coil 57, the coil circuit board 51, or the like.

A material of the first damping member 66 is a damping material. For example, the material of the first damping member 66 is a damping adhesive (also referred to as a shock absorption adhesive or a cushioning material) such as silicone rubber, polyurethane, or thermoplastic elastomer. The first damping member 66 can help reduce unnecessary vibration, impact, and noise generated therefrom, and can further enhance stability and a response speed of the image stabilization motor 123, to enhance control performance of the image stabilization motor 123.

A specific structure of the first damping member 66 is not limited herein. For example, the first damping member 66 may be cylindrical (as shown in FIG. 17).

FIG. 33 is a sectional view in which the second damping member is in cooperation with the case and the first magnet support.

As shown in FIG. 33, in the thickness direction Z of the image stabilization motor 123, the second damping member 67 is located between the case 62 and the first magnet support 41, and two ends of the second damping member 67 are respectively in contact with the case 62 and the first magnet support 41. In some examples, as shown in FIG. 33, there are two second damping members 67, and the two second damping members 67 are spaced apart in the length direction X of the image stabilization motor 123.

A material of the second damping member 67 is a damping material. For example, the material of the second damping member 67 is a damping adhesive (also referred to as a shock absorption adhesive or a cushioning material) such as silicone rubber, polyurethane, or thermoplastic elastomer. The second damping member 67 can help reduce unnecessary vibration, impact, and noise generated therefrom, and can further enhance stability and the response speed of the image stabilization motor 123, to enhance control performance of the image stabilization motor 123.

A specific structure of the second damping member 67 is not limited herein. For example, the second damping member 67 may be cylindrical.

In some embodiments, a first groove (not shown in the figure) for accommodating a part of the second damping member 67 is provided on a side that is of the first magnet support 41 and that faces the case 62 in the thickness direction Z of the image stabilization motor 123, so that the second damping member 67 can be positioned, and a size of the second damping member 67 in the thickness direction Z of the image stabilization motor 123 can be increased.

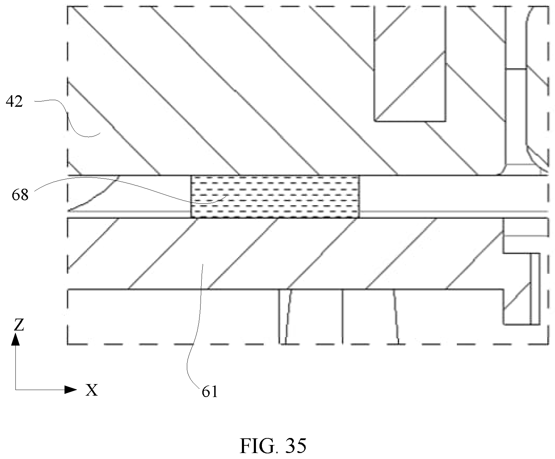

FIG. 34 is a sectional view in which the third damping member is in cooperation with the coil support and the second magnet support. FIG. 35 is an enlarged view of a position M in FIG. 34.

As shown in FIG. 35, in the thickness direction Z of the image stabilization motor 123, the third damping member 68 is located between the second magnet support 42 and the coil support 61, and two ends of the third damping member 68 are respectively in contact with the coil support 61 and the second magnet support 42.

A material of the third damping member 68 is a damping material. For example, the material of the third damping member 68 is a damping adhesive (also referred to as a shock absorption adhesive or a cushioning material) such as silicone rubber, polyurethane, or thermoplastic elastomer. The third damping member 68 can help reduce unnecessary vibration, impact, and noise generated therefrom, and can further enhance stability and the response speed of the image stabilization motor 123, to enhance control performance of the image stabilization motor 123.

A specific structure of the third damping member 68 is not limited herein. For example, the third damping member 68 may be cylindrical.

In some embodiments, a second groove (not shown in the figure) for accommodating a part of the third damping member 68 is provided on a side that is of the second magnet support 42 and that faces the coil support 61 in the thickness direction Z of the image stabilization motor 123, so that the third damping member 68 can be positioned, and a size of the third damping member 68 in the thickness direction Z of the image stabilization motor 123 can be increased.

In the descriptions of embodiments of this application, it should be noted that, unless otherwise clearly specified and limited, the term "mounting", "interconnect", or "connection" should be understood in a broad sense, for example, may be fixed connection, or may be indirect connection through an intermediate medium, or may be internal communication between two elements or an interaction relationship between two elements. A person of ordinary skill in the art may understand specific meanings of the foregoing terms in embodiments of this application based on specific cases. The terms "first", "second", "third", "fourth", and the like (if any) are intended to distinguish between similar objects, but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions described in the foregoing embodiments may still be modified, or some or all of technical features thereof may be equivalently replaced. However, these modifications or replacements do not depart from the scope of the technical solutions in embodiments of this application.

## Claims

1. An image stabilization motor (123), comprising:
a stator, comprising a stationary platform (321);
a mover, configured to bear an image sensor (122); and
a suspension wire (322), connected between the mover and the stationary platform (321), wherein in a direction perpendicular to a thickness direction (Z) of the image stabilization motor (123), a center of gravity and a geometric center of the mover are spaced apart; and
an avoidance concave (325) is formed on the stationary platform (321), the center of gravity of the mover is between the avoidance concave (325) and the geometric center of the mover, the avoidance concave (325) is located on a side that is of the stationary platform (321) and that faces the suspension wire (322) in the direction perpendicular to the thickness direction (Z) of the image stabilization motor (123), the avoidance concave (325) penetrates the stationary platform (321) in the thickness direction (Z) of the image stabilization motor (123), and the avoidance concave (325) is configured to avoid the suspension wire (322).

2. The image stabilization motor (123) according to claim 1, wherein the stator further comprises:
a coil circuit board (51);
an integrated circuit (52), electrically connected to a side of the coil circuit board (51); and
a shielding cover (53), comprising a shielding body (531) and a lug plate (532), wherein the shielding body (531) and the lug plate (532) are located on a same side of the coil circuit board (51), the shielding body (531) and the coil circuit board (51) enclose an accommodation space for accommodating the integrated circuit (52), an end of the lug plate (532) is fastened to the shielding body (531), and the lug plate (532) is located outside the accommodation space and is attached to the coil circuit board (51).

3. The image stabilization motor (123) according to claim 1 or 2, wherein the stator further comprises:
the coil circuit board (51);
the integrated circuit (52), electrically connected to the side of the coil circuit board (51); and
a first reinforcement plate (54), fastened to a side that is of the coil circuit board (51) and that faces away from the integrated circuit (52), wherein
at least a part of an orthographic projection of the integrated circuit (52) onto the coil circuit board (51) is within an orthographic projection of the first reinforcement plate (54) onto the coil circuit board (51).

4. The image stabilization motor (123) according to any one of claims 1 to 3, wherein the mover further comprises:
a first magnet support (41); and
a second magnet support (42), comprising a support main body (421) and a connection plate body (422), wherein the support main body (421) and the first magnet support (41) are spaced apart in the thickness direction (Z) of the image stabilization motor (123), one end of the connection plate body (422) is fastened to the support main body (421), another end of the connection plate body (422) is fastened to the first magnet support (41), and a stiffener structure (423) is disposed on the connection plate body (422).

5. The image stabilization motor (123) according to any one of claims 1 to 4, wherein the mover further comprises:
the first magnet support (41); and
the second magnet support (42), comprising the support main body (421) and the connection plate body (422), wherein the support main body (421) and the first magnet support (41) are spaced apart in the thickness direction (Z) of the image stabilization motor (123), the one end of the connection plate body (422) is fastened to the support main body (421), the another end of the connection plate body (422) is fastened to the first magnet support (41), a width of the connection plate body (422) in a width direction (Y) of the image stabilization motor (123) gradually decreases in a direction from the support main body (421) to the first magnet support (41), and each of two end surfaces of the connection plate body (422) in the width direction (Y) of the image stabilization motor (123) is an inclined surface inclined to the thickness direction (Z) of the image stabilization motor (123).

6. The image stabilization motor (123) according to any one of claims 1 to 5, wherein the mover further comprises:
the first magnet support (41), comprising a first metal portion (411); and
the second magnet support (42), comprising the support main body (421) and the connection plate body (422), wherein the support main body (421) and the first magnet support (41) are spaced apart in the thickness direction (Z) of the image stabilization motor (123), the one end of the connection plate body (422) is fastened to the support main body (421), the another end of the connection plate body (422) comprises a second metal portion (4221), the second metal portion (4221) is welded to the first metal portion (411), and in a length direction (X) of the image stabilization motor (123), at least a part of an orthographic projection of a part that is of the second metal portion (4221) and that is opposite to the first metal portion (411) onto the first metal portion (411) is within the first metal portion (411).

7. The image stabilization motor (123) according to claim 6, wherein central lines of the first metal portion (411) and the second metal portion (4221) in the width direction (Y) of the image stabilization motor (123) coincide.

8. The image stabilization motor (123) according to any one of claims 1 to 7, wherein the mover further comprises:
the first magnet support (41); and
the second magnet support (42), comprising the support main body (421) and the connection plate body (422), wherein the support main body (421) and the first magnet support (41) are spaced apart in the thickness direction (Z) of the image stabilization motor (123), the one end of the connection plate body (422) is fastened to the support main body (421), and at least a part of an end surface of an end that is of the connection plate body (422) and that faces the stator in the length direction (X) of the image stabilization motor (123) is made of metal.

9. The image stabilization motor (123) according to any one of claims 1 to 8, wherein the stator further comprises:
a coil support (61), in contact with the stationary platform (321) and fastened to the stationary platform (321); and
a case (62), wherein the case (62) is located on a side that is of the coil support (61) and that is away from the stationary platform (321) in the thickness direction (Z) of the image stabilization motor (123), and the case (62) is welded to the coil support (61).

10. The image stabilization motor (123) according to any one of claims 1 to 9, wherein the stator further comprises:
the coil support (61), comprising a first metal support (611) and a first injection molded part (612), wherein the first metal support (611) is of an integrated structure, and the first metal support (611) is fastened to the first injection molded part (612).

11. The image stabilization motor (123) according to any one of claims 1 to 10, wherein the stator further comprises:
a cover (10), having a light-transmitting through hole (11) for light to pass through; and
the coil support (61), comprising the first metal support (611) and the first injection molded part (612), wherein the first metal support (611) comprises a metal main portion (6111) and a metal bent portion (6112), at least a part of the metal main portion (6111) is embedded inside the first injection molded part (612), and the metal bent portion (6112) is fastened to the cover (10).

12. The image stabilization motor (123) according to any one of claims 1 to 11, wherein the stator comprises:
an accommodation cavity, wherein the mover is located inside the accommodation cavity; and
the case (62), serving as a partial cavity wall of the accommodation cavity and having a washing hole (63), wherein the washing hole (63) communicates with the inside of the accommodation cavity.

13. The image stabilization motor (123) according to claim 12, wherein in the thickness direction (Z) of the image stabilization motor (123), a distance between the washing hole (63) and a bottom surface that is of the case (62) and that is away from the suspension wire (322) is less than or equal to one third of a thickness of the image stabilization motor (123).

14. The image stabilization motor (123) according to any one of claims 1 to 13, wherein the stator further comprises:
the coil support (61);
the cover (10), fastened to the coil support (61);
a coil circuit board assembly (50), fastened to the coil support (61); and
an adhesive member, wherein the adhesive member is disposed on a surface of at least one of the coil support (61), the cover (10), and the coil circuit board assembly (50).

15. The image stabilization motor (123) according to any one of claims 1 to 14, wherein the stator further comprises:
a first flexible member (64), wherein the first flexible member (64) is disposed on each of two sides of the mover that face away from each other in the length direction (X) of the image stabilization motor (123).

16. The image stabilization motor (123) according to claim 15, wherein the mover further comprises:
the first magnet support (41); and
the second magnet support (42), wherein at least a part of the second magnet support (42) and the first magnet support (41) are spaced apart in the thickness direction (Z) of the image stabilization motor (123), and the first flexible member (64) faces at least one of the first magnet support (41) and the second magnet support (42) in the length direction (X) of the image stabilization motor (123).

17. The image stabilization motor (123) according to any one of claims 1 to 16, wherein the stator further comprises:
a second flexible member (65), wherein the second flexible member (65) is disposed on each of two sides of the mover that face away from each other in the width direction (Y) of the image stabilization motor (123).

18. The image stabilization motor (123) according to claim 17, wherein the stator further comprises the coil support (61), and the second flexible member (65) is fastened to the coil support (61); and
the mover further comprises the first magnet support (41) and the second magnet support (42), and the second flexible member (65) faces at least one of the first magnet support (41) and the second magnet support (42) in the width direction (Y) of the image stabilization motor (123).

19. The image stabilization motor (123) according to any one of claims 1 to 18, wherein the mover comprises the first magnet support (41) and the second magnet support (42), and the first magnet support (41) is connected to the second magnet support (42);
the stator comprises the case (62), the coil support (61), and the coil circuit board assembly (50), and the case (62) and the coil circuit board assembly (50) are separately fastened to the coil support (61); and
the image stabilization motor (123) further comprises at least one of the following damping members:
a first damping member (66), wherein in the thickness direction (Z) of the image stabilization motor (123), the first damping member (66) is located between the first magnet support (41) and the support main body (421) of the second magnet support (42), one end of the first damping member (66) is in contact with the first magnet support (41), and another end of the first damping member (66) is in contact with the coil circuit board assembly (50) or the coil support (61);
a second damping member (67), wherein in the thickness direction (Z) of the image stabilization motor (123), the second damping member (67) is located between the case (62) and the first magnet support (41), and two ends of the second damping member (67) are respectively in contact with the case (62) and the first magnet support (41); and
a third damping member (68), wherein in the thickness direction (Z) of the image stabilization motor (123), the third damping member (68) is located between the second magnet support (42) and the coil support (61), and two ends of the third damping member (68) are respectively in contact with the coil support (61) and the second magnet support (42).

20. The image stabilization motor (123) according to any one of claims 1 to 19, wherein the mover further comprises a first magnet member (43) and the first magnet support (41), the first magnet support (41) comprises a first magnetic conductive sheet (412) and a second magnetic conductive sheet (413), the first magnetic conductive sheet (412) is located between the first magnet member (43) and the second magnetic conductive sheet (413), and the first magnet member (43) is a Halbach magnet array.

21. The image stabilization motor (123) according to claim 20, wherein the stator further comprises a third magnet member (45), in the thickness direction (Z) of the image stabilization motor (123), the third magnet member (45) is located on a side that is of the second magnetic conductive sheet (413) and that is away from the first magnetic conductive sheet (412), and is spaced apart from the second magnetic conductive sheet (413), and the third magnet member (45) is magnetically attracted to the second magnetic conductive sheet (413).

22. A camera module (120), comprising a lens (121), an image sensor (122), and the image stabilization motor (123) according to any one of claims 1 to 21, wherein the image sensor (122) is located on a light exit side of the lens (121), and the image sensor (122) is fastened to the mover of the image stabilization motor (123).

23. An electronic device (100), comprising a housing (110) and the camera module (120) according to claim 22, wherein the camera module (120) is mounted on the housing (110).
